# EUROPEAN PATENT APPLICATION

(11) **EP 1 736 893 A1**
(43) Date of publication of application: **27.12.2006**
(21) Application number: 05727292.4
(22) Date of filing: 28.03.2005
(51) Int. Cl.: G06F 15/78

(54) **SEMICONDUCTOR DEVICE AND CELLULAR PHONE USING THE SAME**

(30) Priority: 01.04.2004 JP 2004108832
(71) Applicant: Matsusita Electric Industrial Co., Ltd., Kadoma-shi, Osaka 571-8501 (JP)
(72) Inventor: HOSHINO, Masashi Mat. Elec. Ind. Co., Ltd., IPROC, Chuo-ku, Osaka-shi, Osaka 540-6319 (JP); TOJIMA, Masayoshi Mat. Elec. Ind. Co., Ltd., IPROC, Chuo-ku, Osaka-shi, Osaka 540-6319 (JP); NISHIDA, Youichi Mat. Elec. Ind. Co., Ltd., IPROC, Chuo-ku, Osaka-shi, Osaka 540-6319 (JP)
(74) Representative: Pautex Schneider, Nicole Véronique
(86) International application number: PCT/JP2005/006537
(87) International publication number: WO 2005/096169

(57) **Abstract**

A semiconductor device (100) comprises a processor unit (110) including an internal CPU (113), an internal interface section (130), an external interface section (140) including an interface unit (143) connected to an external CPU (201), a plurality of processing circuits (121)-(126), and a connection control circuit (180). The internal interface section (130) includes a first bus (191) connected to the internal CPU (113), a second bus (192) connected to the external CPU (201) through the interface unit (143), and selecting circuits (131)-(136), controlled by the connection control circuit (180) according to the instruction of the internal CPU (113) or the external CPU (201), and operable to select respective connections of the plurality of processing circuits (121)-(126) to the first bus (191) or to the second bus (192). All the processing circuits (121)-(126) are controllable by the internal CPU (113) and the external CPU (201).

## Description

### Technical Field

The present invention relates to a semiconductor device operable to perform signal processing for image data and voice/audio data, etc.

### Background Art

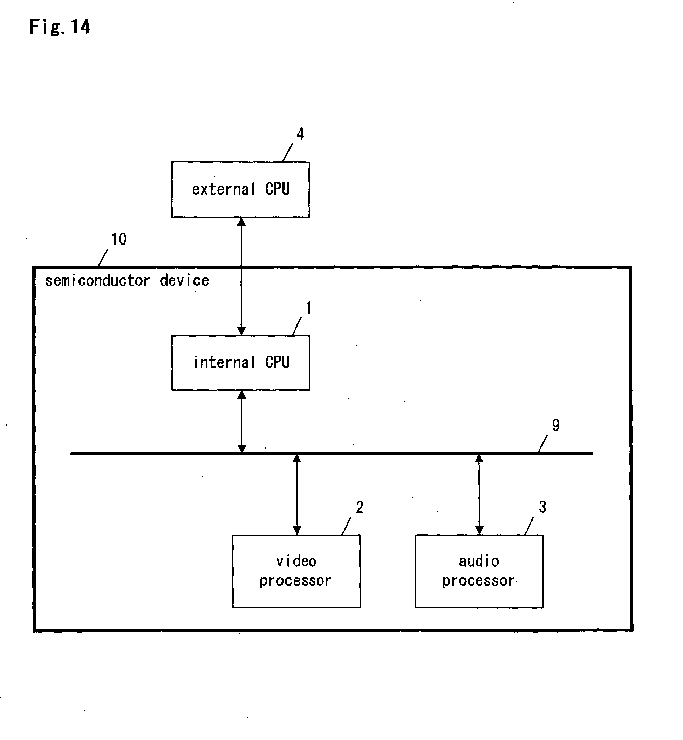

Document 1 (Published Japanese patent application No. 2002-238034) discloses a prior art on a conventional semiconductor device which possesses an interface operable to connect to an external CPU, and performs signal processing of multimedia data, such as image and sound data. Fig. 14 is a block diagram illustrating a conventional semiconductor device 10 for multimedia-data processing.

The semiconductor device 10 shown in Fig. 14 is described by the document 1, in which an internal CPU 1, a video processor 2, and an audio processor 3 are connected to a bus 9, and the internal CPU 1 is connected to an external CPU 4 via an interface (not shown). The internal CPU 1 controls the entire semiconductor device 10, the video processor 2 processes a video signal, and the audio processor 3 processes an audio signal.

The internal CPU 1 performs processing according to the instructions from the external CPU 4. For example, the internal CPU 1, upon receipt of the instructions of decoding from the external CPU 4, receives a bit stream from the external CPU 4 and separates the received bit stream into a video bit stream and an audio bit stream. After the separation processing, the internal CPU 1 transmits the video bit stream to the video-processor 2, and the audio bit stream to the audio-processor 3, respectively, and performs control so that decoding processing may be practiced by the video processor 2 and the audio processor 3. The decoded video and audio data are outputted, respectively, in synchronization by the internal CPU 1.

In mobile terminals represented by a recent mobile phone and an apparatus called a home server represented by a DVD recorder, a HD recorder, etc., the functions for realizing various applications are added, such as a digital still camera function, a video camera function, an audio recording/reproduction function, a videophone function, a moving-image recoding/reproduction/edit function, and a still-image recoding/reproduction/edit function. Consequently, the semiconductor device mounted in these media processing apparatus tends to possess an increased number of processing units therein.

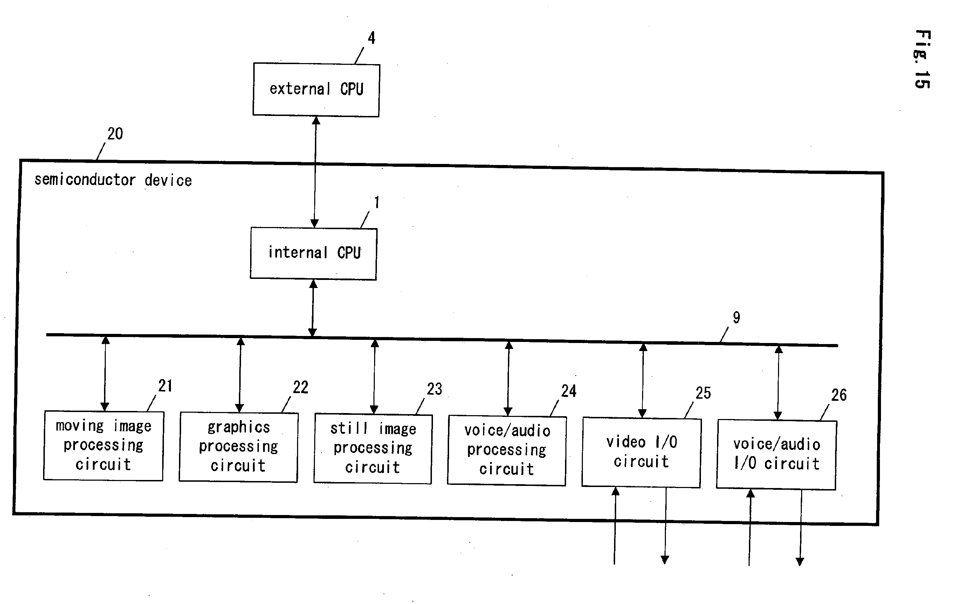

The following describes a semiconductor device suitable for the above-mentioned media processing apparatus, after the consideration based on the conventional semiconductor device 1 shown in Fig. 14. Namely, Fig. 15 is a block diagram illustrating a semiconductor device 20 for the media processing apparatus. In Fig. 15, the same components as those in Fig. 14 are attached with the same reference symbols or numerals and the descriptions thereof are omitted.

The semiconductor device 20 shown in Fig. 15 comprises an internal CPU 1, a moving image processing circuit 21 operable to perform compression/expansion of moving images in conformity to such as an MPEG standard, a graphics processing circuit 22 operable to generate graphics, a still image processing circuit 23 operable to perform compression/expansion of still images in conformity to such as a JPEG standard, a voice/audio processing circuit 24 operable to perform compression/expansion of voice or audio data, a video I/O circuit 25 operable to input and output video data, and a voice/audio I/O circuit 26 operable to input and output voice or audio data. All of these elements are connected to a bus 9.

In the following explanation, the moving image processing circuit 21, the graphics processing circuit 22, the still image processing circuit 23, the voice/audio processing circuit 24, the video I/O circuit 25, and the voice/audio I/O circuit 26 are collectively called processing circuits 21-26.

The internal CPU 1 is connected to the external CPU 4 via a not-shown interface.

The semiconductor device 20 performs fundamentally the same operation with the semiconductor device 10 mentioned above in the execution of application. Namely, according to the instructions from the external CPU 4, the internal CPU 1 controls the processing circuits 21-26, and practices processing required for the application.

However, according to the structure of the semiconductor device 20 shown in Fig. 15, the internal CPU 1 has to intensively control all of the processing circuits 21-26. Consequently, when the number of processing circuits increases and the processing amount of required control increases, or when, in order to perform highly efficient processing, the processing amount of the control required for a part of the processing circuits increases, the performance of the internal CPU 1 will be insufficient and the function or performance of the realizable application will be restricted.

Moreover, since the control of the processing circuits is concentrated and fixed to the internal CPU 1, the operating frequency of the internal CPU 1 becomes high, with the accompanying increase of power consumption.

Thus, in order to cope with the various functions of the latest media processing apparatus, it is required to provide a new high-performance, high-efficiency, low-power-consumption semiconductor device with which a flexible system configuration including an external CPU can be realized.

### Disclosure of the Invention

In view of the above, an object of the present invention is to provide a high-performance, high-efficiency, low-power-consumption semiconductor device with which a flexible system configuration connectable to an external CPU can be realized, and a mobile phone using the semiconductor device.

A first aspect of the present invention provides a semiconductor device comprising: a processor unit; an internal interface section connected to the processor unit; an external interface section connected to the processor unit and the internal interface section; and a plurality of data processing units connected to the internal interface section, wherein the processor unit comprises an internal CPU, wherein the external interface section is connected to an external CPU, and wherein each of the plurality of data processing units can be controlled by any one of the internal CPU and the external CPU, via the internal interface section.

According to the structure, the external CPU can be connected to the external interface section, and the plurality of internal data processing units can be controlled by any CPU of the internal CPU and the external CPU. Therefore, use of the semiconductor device of the present structure allows a flexible system configuration to be constructed, thereby providing a media processing apparatus possessing various functions.

A second aspect of the present invention provide the semiconductor device as defined in the first aspect, wherein the internal interface section comprises: a first bus connected to the processor unit; a second bus connected to the external interface section; and a plurality of selecting units, each of the plurality of selecting units being connected to the first bus and the second bus, and further connected to each of the plurality of data processing units in a one-to-one correspondence manner. Each of the plurality of selecting units selects one of the first bus and the second bus as a bus to which each corresponding one of the plurality of data processing units is to be connected. Each of the plurality of data processing units can be controlled by any one of the internal CPU and the external CPU, via the bus selected by each corresponding one of the plurality of selecting units.

According to the structure, each of the plurality of selecting units selects the first bus connected to the selected internal CPU or the second bus connected to the external CPU via the external interface section, and each of the plurality of data processing units can be controlled by any CPU of the internal CPU and the external CPU via the bus selected by the selecting unit. Therefore, it is possible to construct the purpose-designed media processing apparatus, by using the semiconductor device of the present structure.

A third aspect of the present invention provides the semiconductor device as defined in the first aspect, wherein the external interface section comprises: a plurality of interface units connected to a plurality of external CPUs in a one-to-one correspondence manner, and wherein each of the plurality of data processing units can be controlled by any one of the internal CPU and the plurality of external CPUs.

According to the structure, the plurality of external CPUs are connectable. Therefore, use of the present semiconductor device allows realizing a higher-performance and higher-efficiency media processing apparatus.

A fourth aspect of the present invention provides the semiconductor device as defined in the third aspect, wherein the plurality of interface units include a first interface unit and a second interface unit, the first interface unit and the second interface unit being connected to the plurality of external CPUs in a one-to-one correspondence manner. Furthermore, the internal interface section comprises: a first arbiter unit connected to the first interface unit and the processor unit; a second arbiter unit connected to the second interface unit and the processor unit; a first bus connected to the first arbiter unit; a second bus connected to the second arbiter unit; and a plurality of selecting units, each of the plurality of selecting units being connected to the first bus and the second bus, and further connected to each of the plurality of data processing units. The first arbiter unit arbitrates between the internal CPU and one of the plurality of external CPUs connected to the first interface unit, thereby connecting the arbitrated CPU to the first bus, and the second arbiter unit arbitrates between the internal CPU and one of the plurality of external CPUs connected to the second interface unit, thereby connecting the arbitrated CPU to the second bus. Each of the plurality of selecting units is connected to each of the plurality of data processing units and selects one of the first bus and the second bus as a bus to which each corresponding one of the plurality of data processing units is to be connected. Thereby, each of the plurality of data processing units can be controlled by any one of the internal CPU and the plurality of external CPUs connected to the external interface section, via the selected bus and one of the first arbiter unit and the second arbiter unit.

According to the structure, it is possible for the plurality of arbiter units to arbitrate between the connection of the internal CPU and the connection of the plurality of external CPUs to the first bus and to the second bus, and it is also possible for the selecting unit to select the connection of the plurality of data processing units to the first bus and the second bus. Consequently, each of the plurality of data processing units is controllable by any CPU of the internal CPU and the plurality of external CPUs.

A fifth aspect of the present invention provides the semiconductor device as defined in the third aspect, wherein the plurality of interface units include a first interface unit and a second interface unit, the first interface unit and the second interface unit being connected to the plurality of external CPUs in a one-to-one correspondence manner. Furthermore, the internal interface section comprises: a first bus connected to the first interface unit; a second bus connected to the second interface unit; a third bus connected to the processor unit; a plurality of first selecting units, each of the plurality of first selecting units being connected to the first bus and the third bus; and a plurality of second selecting units, each of the plurality of second selecting units being connected to the second bus and the third bus. The plurality of data processing units include one or more data processing units belonging to a first processing group and one or more data processing units belonging to a second processing group, the one or more data processing units belonging to the first processing group are connected to the plurality of first selecting units in a one-to-one correspondence manner, and the one or more data processing units belonging to the second processing group are connected to the plurality of second selecting units in a one-to-one correspondence manner. Each of the plurality of first selecting units selects one of the first bus and the third bus as a bus to which each corresponding one of the data processing units belonging to the first processing group is to be connected, and each of the plurality of second selecting units selects one of the second bus and the third bus as a bus to which each corresponding one of the data processing units belonging to the second processing group to be connected. Thereby, each of the one or more data processing units belonging to the first processing group can be controlled by any one of the internal CPU and one of the plurality of external CPUs connected to the first interface unit, via the bus selected by each corresponding one of the plurality of first selecting units, and each of the one or more data processing units belonging to the second processing group can be controlled by any one of the internal CPU and one of the plurality of external CPUs connected to the second interface unit, via the bus selected by each corresponding one of the plurality of second selecting units.

According to the structure, the plurality of data processing units are divided into the first processing group which is composed of an image data processing unit and a voice/audio data processing unit, and the second processing group which is composed of a video I/O unit and a voice/audio I/O unit. Then, the data processing unit of the first processing group is controllable by the internal CPU or the external CPU connected to the first interface unit through the first or third bus selected by the selecting unit. The data processing unit of the second processing group is controllable by the internal CPU or the external CPU connected to the second interface unit through the second or third bus selected by the selecting unit. Therefore, one of the plurality of external CPUs can be properly selected, according to the contents of processing of the first processing group and the second processing group.

A sixth aspect of the present invention provides the semiconductor device as defined in claim 3, wherein the plurality of interface units include a first interface unit and a second interface unit, the first interface unit and the second interface unit being connected to the plurality of external CPUs in a one-to-one correspondence manner. Furthermore, the internal interface section comprises: an arbiter unit connected to the processor unit and the second interface unit; a first bus connected to the first interface unit; a second bus connected to the arbiter unit; a third bus connected to the processor unit; and a plurality of selecting units connected to the first bus and the third bus. The plurality of data processing units include one or more data processing units belonging to a first processing group and one or more data processing units belonging to a second processing group, the one or more data processing units belonging to the first processing group are connected to the plurality of selecting units in a one-to-one correspondence manner, and the one or more data processing units belonging to the second processing group are connected to the second bus. Each of the plurality of selecting units selects one of the first bus and the third bus as a bus to which each corresponding one of the plurality of data processing units is to be connected, and the arbiter unit arbitrates between the internal CPU and one of the plurality of external CPUs connected to the second interface unit, thereby connecting the arbitrated CPU to the second bus. Thereby, each of the one or more data processing units belonging to the first processing group can be controlled by any one of the internal CPU and one of the plurality of external CPUs connected to the first interface unit, via the bus selected by each corresponding one of the plurality of selecting units, and each of the one or more data processing units belonging to the second processing group can be controlled by any one of the internal CPU and one of the plurality of external CPUs connected to the second interface unit, via the arbiter unit and the second bus.

According to the structure, the plurality of data processing units are divided into the first processing group which is composed of an image data processing unit or a voice/audio data processing unit, and a second processing group which is composed of a video I/O unit and a voice/audio I/O unit. Then, the data processing unit of the first processing group is controllable by the internal CPU or the external CPU through the first or third bus selected by the selecting unit. The data processing unit of the second processing group is controllable by the internal CPU or the external CPU through the arbitration of the arbiter unit based on a priority. Therefore, the present structure can also demonstrate the same effect as the semiconductor device related to the fifth aspect of the present invention.

A seventh aspect of the present invention provides the semiconductor device as defined in the first aspect, wherein the processor unit comprises a plurality of internal CPUs, and wherein each of the plurality of data processing units can be controlled by any one of the plurality of internal CPUs and the external CPU.

According to the structure, the external CPU can be connected to the external interface section, and the plurality of internal data processing units can be controlled by any CPU of the plurality of internal CPUs and the external CPU. Therefore, use of the semiconductor device of this structure allows the flexible system configuration to be constructed, thereby providing the media processing apparatus which possesses various functions.

An eighth aspect of the present invention provides the semiconductor device as defined in the seventh aspect, wherein the plurality of internal CPU comprises: a first internal CPU; and a second internal CPU. Furthermore, the internal interface section comprises: an arbiter unit connected to the first internal CPU and the second internal CPU; a first bus connected to the arbiter unit; a second bus connected to the external interface section; and a plurality of selecting units, each of the plurality of selecting units being connected to the first bus and the second bus, and further connected to each of the plurality of data processing units in a one-to-one corresponding manner. Each of the plurality of selecting units selects one of the first bus and the second bus as a bus to which each corresponding one of the plurality of data processing units is to be connected. The arbiter unit arbitrates between the first internal CPU and the second internal CPU, thereby connecting the arbitrated CPU to the first bus. Thereby, each of the plurality of data processing units can be controlled by any one of the first internal CPU, the second internal CPU, and the external CPU, via a bus selected by each corresponding one of the plurality of selecting units.

According to the structure, it is possible to realize a semiconductor device, in which the introduction of the arbiter unit allows the plurality of internal CPUs and the external CPU to control each of the plurality of data processing units by a priority. Therefore, a more complicated application processing becomes possible by providing the plurality of internal CPUs.

A ninth aspect of the present invention provides the semiconductor device as defined in the seventh aspect, wherein the plurality of internal CPU comprises: a first internal CPU; and a second internal CPU. Furthermore, the internal interface section comprises: a switching unit connected to the first internal CPU and the second internal CPU; a first bus connected to the switching unit; a second bus connected to the external interface section; and a plurality of selecting units, each of the plurality of selecting units being connected to the first bus and the second bus, and further connected to each of the plurality of data processing units in a one-to-one corresponding manner. Each of the plurality of selecting units selects one of the first bus and the second bus as a bus to which each corresponding one of the plurality of data processing units is to be connected, and the switching unit switches between the first internal CPU and the second internal CPU, thereby connecting the switched CPU to the first bus. Thereby, each of the plurality of data processing units can be controlled by any one of the first internal CPU, the second internal CPU, and the external CPU, via the bus selected by each corresponding one of the plurality of selecting units.

According to the present structure, the introduction of the switching unit allows for the realization of a semiconductor device, which can set up the control to each of the plurality of data processing units from the plurality of internal CPUs, regardless of a priority. Needless to say, the external CPU can also control each of the plurality of data processing units.

A tenth aspect of the present invention provides the semiconductor device as defined in the seventh aspect, wherein the plurality of internal CPU comprises: a first internal CPU; and a second internal CPU. Furthermore, the internal interface section comprises: a first arbiter unit to the first internal CPU and the external interface section; a second arbiter unit connected to the second internal CPU and the external interface section; a first bus connected to the first arbiter unit; and a second bus connected to the second arbiter unit. The plurality of data processing units include one or more data processing units belonging to a first processing group and one or more data processing units belonging to a second processing group. The one or more data processing units belonging to the first processing group are connected to the first bus and the one or more data processing units belonging to the second processing group are connected to the second bus. The first arbiter unit arbitrates between the first internal CPU and the external CPU connected to the external interface section, thereby connecting the arbitrated CPU to the first bus, and the second arbiter unit arbitrates between the second internal CPU and the external CPU connected to the external interface section, thereby connecting the arbitrated CPU to the second bus. Thereby, each of the data processing units belonging to the first processing group can be controlled by any one of the first internal CPU and the external CPU, via the first arbiter unit and the first bus, and each of the data processing units belonging to the second processing group can be controlled by any one of the second internal CPU and the external CPU, via the second arbiter unit and the second bus.

According to the structure, it is possible to realize a semiconductor device in which each of the data processing units of the first processing group undergoes a control by a CPU that possesses a higher priority out of the first internal CPU and the external CPU, as the result of the arbitration of the first arbiter unit, and each of the data processing units of the second processing group undergoes a control by a CPU that possesses a higher priority out of the second internal CPU and the external CPU, as the result of the arbitration of the second arbiter unit. Moreover, according to the structure, the selecting unit is unnecessary, resulting in reduction of the circuit area of the semiconductor device.

An eleventh aspect of the present invention provides the semiconductor device as defined in the seventh aspect, wherein the plurality of internal CPU comprises: a first internal CPU; and a second internal CPU. Furthermore, the internal interface section comprises: a first bus connected to the first internal CPU; a second bus connected to the second internal CPU; a third bus connected to the external interface section; a plurality of first selecting units connected to the first bus and the third bus; and a plurality of second selecting units connected to the second bus and the third bus. The plurality of data processing units include one or more data processing units belonging to a first processing group and one or more data processing units belonging to a second processing group. The one or more data processing units belonging to the first processing group are connected to the plurality of first selecting units in a one-to-one correspondence manner, and the one or more data processing units belonging to the second processing group are connected to the plurality of second selecting units in a one-to-one correspondence manner. Each of the plurality of first selecting units selects one of the first bus and the third bus as a bus to which each corresponding one of the data processing units belonging to the first processing group is to be connected, and each of the plurality of second selecting units selects one of the second bus and the third bus as a bus to which each corresponding one of the data processing units belonging to the second processing group is to be connected. Thereby, each of the one or more data processing units belonging to the first processing group can be controlled by any one of the first internal CPU and the external CPU connected to the external interface section, via the bus selected by the corresponding one of the plurality of first selecting units, and each of the one or more data processing units belonging to the second processing group can be controlled by any one of the second internal CPU and the external CPU connected to the external interface section, via the bus selected by the corresponding one of the plurality of second selecting units.

According to the structure, each of the plurality of data processing units can be connected to a bus selected by the corresponding selecting unit, and can be controlled by a CPU which is accessible through the selected bus.

A twelfth aspect of the present invention provides the semiconductor device as defined in the first aspect, wherein the processor unit comprises: a plurality of internal CPUs, wherein the external interface section comprises: a plurality of interface units. The plurality of interface units are connected to a plurality of external CPUs in a one-to-one correspondence manner, and each of the plurality of data processing units can be controlled by any one of the plurality of internal CPUs and the plurality of external CPUs.

According to the structure, the plurality of external CPUs can be connected to the external interface section, and the plurality of internal data processing units can be controlled by any CPU of the plurality of internal CPUs and the plurality of external CPUs. Therefore, use of the semiconductor device of the present structure allows a flexible system configuration to be constructed, thereby providing the media processing apparatus which possesses various functions.

A thirteenth aspect of the present invention provides the semiconductor device as defined in the twelfth aspect, wherein the plurality of internal CPUs comprises: a first internal CPU; and a second internal CPU, wherein the plurality of interface units comprises: a first interface unit; and a second interface unit, wherein the first interface unit and the second interface unit are connected to the plurality of external CPUs in a one-to-one correspondence manner. Furthermore, the internal interface section comprises: a first bus connected to the first internal CPU; a second bus connected to the first interface unit; a third bus connected to the second internal CPU; a fourth bus connected to the second interface unit; a plurality of first selecting units connected to the first bus and the second bus; and a plurality of second selecting units connected to the third bus and the fourth bus. The plurality of data processing units include one or more data processing units belonging to a first processing group and one or more data processing units belonging to a second processing group. The one or more data processing units belonging to the first processing group are connected to the plurality of first selecting units in a one-to-one corresponding manner, and the one or more data processing units belonging to the second processing group are connected to the plurality of second selecting units in a one-to-one corresponding manner. Each of the plurality of first selecting units selects one of the first bus and the second bus as a bus to which each corresponding one of the one or more data processing units belonging to the first processing group is to be connected, and each of the plurality of second selecting units selects one of the third bus and the fourth bus as a bus to which each corresponding one of the one or more data processing units belonging to the second processing group is to be connected. Thereby, each of the one or more data processing units belonging to the first processing group can be controlled by any one of the first internal CPU and the external CPU connected to the first interface unit, via the bus selected by each corresponding one of the plurality of first selecting units, and each of the one or more data processing units belonging to the second processing group can be controlled by any one of the second internal CPU and the external CPU connected to the second interface unit, via the bus selected by each corresponding one of the plurality of second selecting units.

According to the structure, it is possible to construct a very advanced AV system, in which the plurality of data processing units are divided into a first processing group which is composed of an image data processing unit and a voice/audio data processing unit, and a second processing group which is composed of a video I/O unit and a voice/audio I/O unit. The first processing group undergoes control set chiefly by the first internal CPU and the external CPU connected to the first interface unit, and the second processing group undergoes control set chiefly by the second internal CPU and the external CPU connected to the second interface unit.

A fourteenth aspect of the present invention provides the semiconductor device as defined in the first aspect, wherein the internal CPU included in the processor unit and the external CPU connected to the external interface section operate in parallel.

According to the structure, it is possible to provide an advanced parallel processing type-semiconductor device in which an internal CPU and an external CPU control a plurality of data processing units in parallel. Furthermore, the external CPU and the internal CPU can share the load in controlling the plurality of data processing circuits.

A fifteenth aspect of the present invention provides the semiconductor device as defined in the seventh aspect, wherein each of the plurality of internal CPUs included in the processor unit operates at a variable operating frequency.

According to the structure, it is possible to change the operating frequency of each CPU, so that the pace of processing of the plurality of internal CPUs may be adjusted. Consequently, the operating frequency of an internal CPU with a light processing load can be reduced, with accompanying reduction in the power consumption of the semiconductor device.

A sixteenth aspect of the present invention provides the semiconductor device as defined in the first aspect, wherein the plurality of data processing units include at least two of a moving picture processing circuit, a graphics processing circuit, a still picture processing circuit, a voice/audio processing circuit, a video input/output circuit, and a voice/audio input/output circuit.

According to the structure, the present semiconductor device can be used for the mobile information machines and equipment which need image processing, such as a camera-installed mobile phone.

A seventeenth aspect of the present invention provides a mobile phone comprising: a semiconductor device as defined in the first aspect; an application processing LSI; a RF processing LSI; and a baseband processing LSI, wherein the semiconductor device executes video data processing and audio data processing that require high load when executed by the application processing LSI.

According to the structure, it is possible to realize a high-performance, high-efficiency, low-power consumption mobile phone, and other equipment.

An eighteenth aspect of the present invention provides the mobile phone as defined in the seventeenth aspect, wherein the application processing LSI comprises at least one or more CPUs operable to share processing of the CPU included in the semiconductor device.

According to the structure, the CPU included in the application processing LSI functions as an external CPU for the semiconductor device.

### Brief Description of the Drawings

Fig. 1 is a block diagram illustrating a semiconductor device in Embodiment 1 of the present invention;
Fig. 2 is a block diagram illustrating a semiconductor device in Embodiment 2 of the present invention;
Fig. 3 is a block diagram illustrating a semiconductor device in Embodiment 3 of the present invention;
Fig. 4 is a block diagram illustrating a semiconductor device in Embodiment 4 of the present invention;
Fig. 5 is a block diagram illustrating a semiconductor device in Embodiment 5 of the present invention;
Fig. 6 is a block diagram illustrating a semiconductor device in Embodiment 6 of the present invention;
Fig. 7 is a block diagram illustrating a semiconductor device in Embodiment 7 of the present invention;
Fig. 8 is a block diagram illustrating a semiconductor device in Embodiment 8 of the present invention;
Fig. 9 is a block diagram illustrating a semiconductor device in Embodiment 9 of the present invention;
Fig. 10 is a block diagram illustrating a semiconductor device in Embodiment 10 of the present invention;
Fig. 11 is a block diagram illustrating a semiconductor device in Embodiment 11 of the present invention;
Fig. 12 is a block diagram illustrating a semiconductor device in Embodiment 12 of the present invention;
Fig. 13 is a block diagram illustrating a mobile phone in Embodiment 13 of the present invention;
Fig. 14 is a block diagram illustrating a conventional semiconductor device for multimedia-data processing; and
Fig. 15 is a block diagram illustrating a semiconductor device for a media processing apparatus.

### Best Mode for Carrying out the Invention

Hereinafter, a description is given of embodiments of the invention with reference to the accompanying drawings.

### Embodiment 1

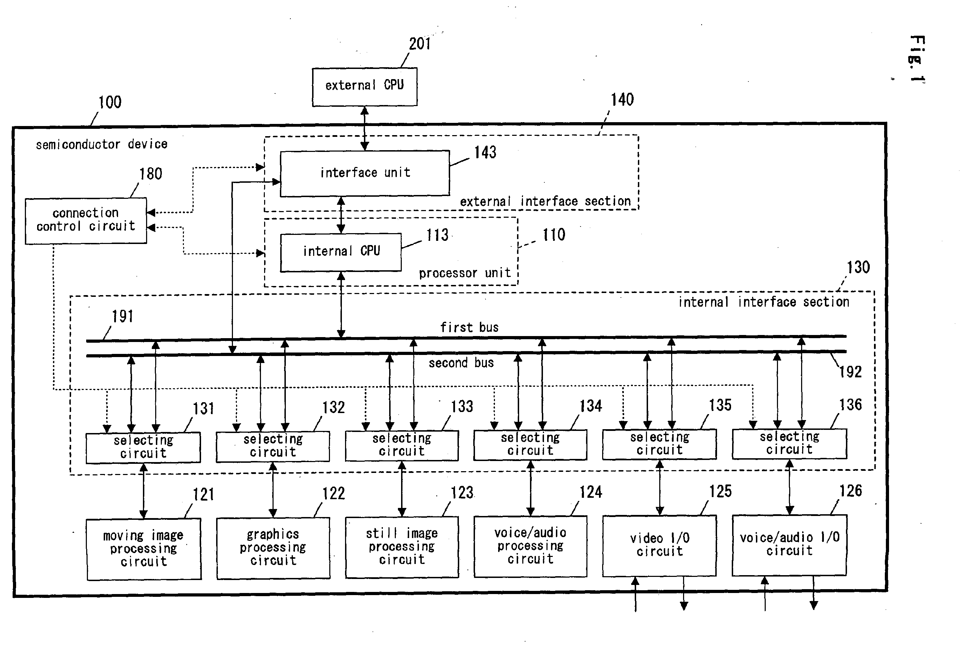

Fig. 1 is a block diagram illustrating a semiconductor device 100 in Embodiment 1 of the present invention. The semiconductor device 100 according to the present embodiment comprises a processor unit 110, an internal interface section 130, an external interface section 140, a plurality of processing circuits 121-126, and a connection control circuit 180. Each of the processing circuits 121-126 corresponds to a data processing unit.

The processor unit 110 possesses an internal CPU 113.

The external interface section 140 possesses an interface unit 143, and an external CPU 201 can be connected via the interface unit 143. The internal CPU 113 and the interface unit 143 are connected internally.

The internal interface section 130 possesses a first bus 191 connected to the internal CPU 113, a second bus 192 connected to the external CPU 201 via the interface unit 143, and selecting circuits 131-136 which select each connection of the plurality of processing circuits 121-126 to the first bus 191 or to the second bus 192. Each of the selecting circuits 131-136 corresponds to a selecting unit.

According to the instruction of the internal CPU 113 or the external CPU 201, the connection control circuit 180 controls each of selecting circuits 131-136 to select the first bus 191 or the second bus 192.

Control of the connection control circuit 180 from the internal CPU 113 or the external CPU 201 can be realized, for example, by means of the register write access from each CPU, after preparing a setting register which sets up selection of the selecting circuits 131-136, and by preparing the setting path from the internal CPU 113 or the external CPU 201.

In the semiconductor device 100 of the present embodiment shown in Fig. 1, a plurality of processing circuits operable to perform image processing and voice processing are illustrated.

Namely, the plurality of processing circuits include the following circuits: a moving image processing circuit 121 operable to perform processing of compression/expansion etc. of a moving image according to the MPEG standard; a graphics processing circuit 122 operable to generate graphics; a still image processing circuit operable to perform processing of compression/expansion etc. of a still image according to the JPEG standard; a voice/audio processing circuit 124 operable to perform processing of compression/expansion etc. of voice or audio data; a video I/O circuit 125 operable to perform input/output of video data from an external camera or to a display, filter processing, rotation processing, zooming processing, and synthesizing, etc. of the video data; and a voice/audio I/O circuit 126 operable to perform input/output of audio data from an external microphone or to a speaker, filter processing of the audio data, etc.

In the following explanation, the plurality of processing circuits are simply written as processing circuits 121-126.

The internal CPU 113 controls the processing circuits which are connected through the first bus 191 (namely, processing circuits whose connection to the first bus 191 is selected by the selecting circuits 131-136 among the processing circuits 121-126). The internal CPU 113 also performs a synchronization processing with the external CPU 201 and data processing other than the data processing which the processing circuits 121-126 perform.

In the semiconductor device 100 of the present embodiment, in the first bus 191, the internal CPU 113 operates as a bus master, and among the processing circuits 121-126, a processing circuit whose connection to the first bus 191 is selected by the corresponding one of the selecting circuits 131-136 operates as a bus slave. In the second bus 192, the external CPU 201 operates as a bus master, and among the processing circuits 121-126, a processing circuit whose connection to the second bus 192 is selected by the corresponding one of the selecting circuits 131-136 operates as a bus slave.

Therefore, according to the semiconductor device 100 of the present embodiment, each of the processing circuits 121-126 can be connected to the first bus 191 or to the second bus 192 by switching connection of each corresponding one of the selecting circuits 131-136, thereby, the processing circuit connected to the first bus 191 becomes controllable by the internal CPU 113, and the processing circuit connected to the second bus 192 becomes controllable by the external CPU 201 further through the interface unit 143.

### Embodiment 2

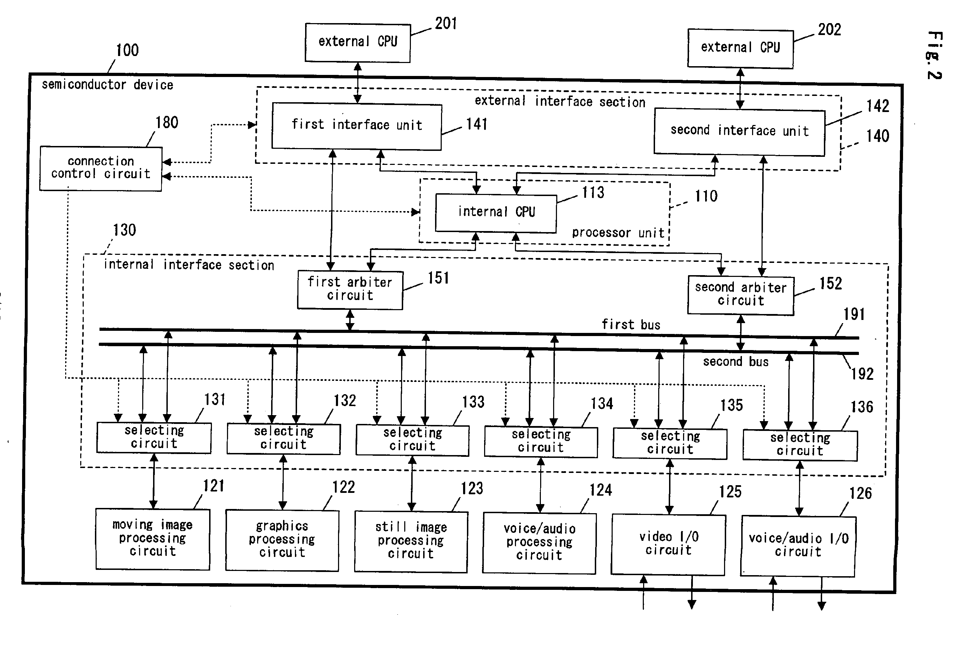

Fig. 2 is a block diagram illustrating a semiconductor device 100 in Embodiment 2 of the present invention. In Fig. 2, the same components as those in Fig. 1 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The semiconductor device 100 of the present embodiment differs from the semiconductor device 100 of Embodiment 1 of the present invention in the following point. Namely, the external interface section 140 includes a first interface unit 141 and a second interface unit 142, and an external CPU 201 is connected to the first interface unit 141, and another external CPU 202 is connected to the second interface unit 142.

Furthermore, the internal interface section 130 includes a first arbiter circuit 151 and a second arbiter circuit 152. The first arbiter circuit 151 arbitrates between an internal CPU 113 and the first interface unit 141, and connects one of them to a first bus 191. The second arbiter circuit 152 arbitrates between the internal CPU 113 and the second interface unit 142, and connects one of them to a second bus 192. The first arbiter circuit 151 and the second arbiter circuit 152 correspond to arbiter units, respectively.

When the internal CPU 113 and the external CPU 201 access the first bus 191 simultaneously, the arbitration in the first arbiter circuit 151 gives priority to the access from a high-priority CPU, and makes the access from a low-priority CPU stand by until the access from the high-priority CPU is completed. The arbitration of the second arbiter circuit 152 is similar to the arbitration of the first arbiter circuit 151.

According to the instruction of the internal CPU 113 or the external CPU 201, the connection control circuit 180 controls each of selecting circuits 131-136 to select the first bus 191 or the second bus 192.

In the semiconductor device 100 of the present embodiment, in the first bus 191, the internal CPU 113 and the external CPU 201 operate as bus masters, and among the processing circuits 121-126, a processing circuit whose connection to the first bus 191 is selected by the corresponding one of the selecting circuits 131-136 operates as a bus slave. In the second bus 192, the internal CPU 113 and the external CPU 201 operate as bus masters, and among the processing circuits 121-126, a processing circuit whose connection to the second bus 192 is selected by the corresponding one of the selecting circuits 131-136 operates as a bus slave.

Therefore, according to the semiconductor device 100 of the present embodiment, each of the processing circuits 121-126 can be connected to the first bus 191 or to the second bus 192 by switching connection of each corresponding one of the selecting circuits 131-136, thereby, the processing circuit connected to the first bus 191 becomes controllable by the internal CPU 113 or the external CPU 201, and the processing circuit connected to the second bus 192 becomes controllable by the internal CPU 113 or the external CPU 202.

### Embodiment 3

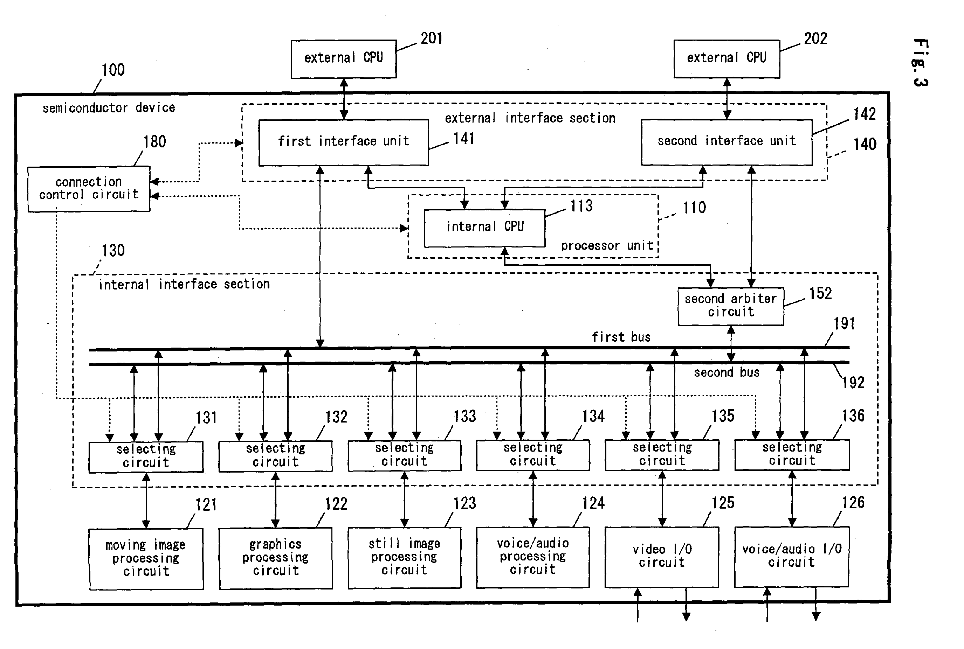

Fig. 3 is a block diagram illustrating a semiconductor device 100 in Embodiment 3 of the present invention. In Fig. 3, the same components as those in Fig. 2 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The semiconductor device 100 of the present embodiment can be regarded as a modification of the semiconductor device 100 of Embodiment 2 of the present invention shown in Fig. 2. Namely, the internal interface section 130 of the present embodiment omits the first arbiter circuit 151 in Fig. 2, and is constructed so that only an external CPU 201 is always connected to a first bus 191.

Therefore, in the semiconductor device 100 of the present embodiment, in the first bus 191, the external CPU 201 operates as a bus master, and among the processing circuits 121-126, a processing circuit whose connection to the first bus 191 is selected by the corresponding one of the selecting circuits 131-136 operates as a bus slave. In the second bus 192, the internal CPU 113 and the external CPU 201 operates as bus masters, and among the processing circuits 121-126, a processing circuit whose connection to the second bus 192 is selected by the corresponding one of the selecting circuits 131-136 operates as a bus slave.

According to the semiconductor device 100 of the present embodiment, each of the processing circuits 121-126 can be connected to the first bus 191 or to the second bus 192 by switching connection of each corresponding one of the selecting circuits 131-136, thereby, the processing circuit connected to the first bus 191 becomes controllable by the external CPU 201, and the processing circuit connected to the second bus 192 becomes controllable by the internal CPU 113 or the external CPU 202.

### Embodiment 4

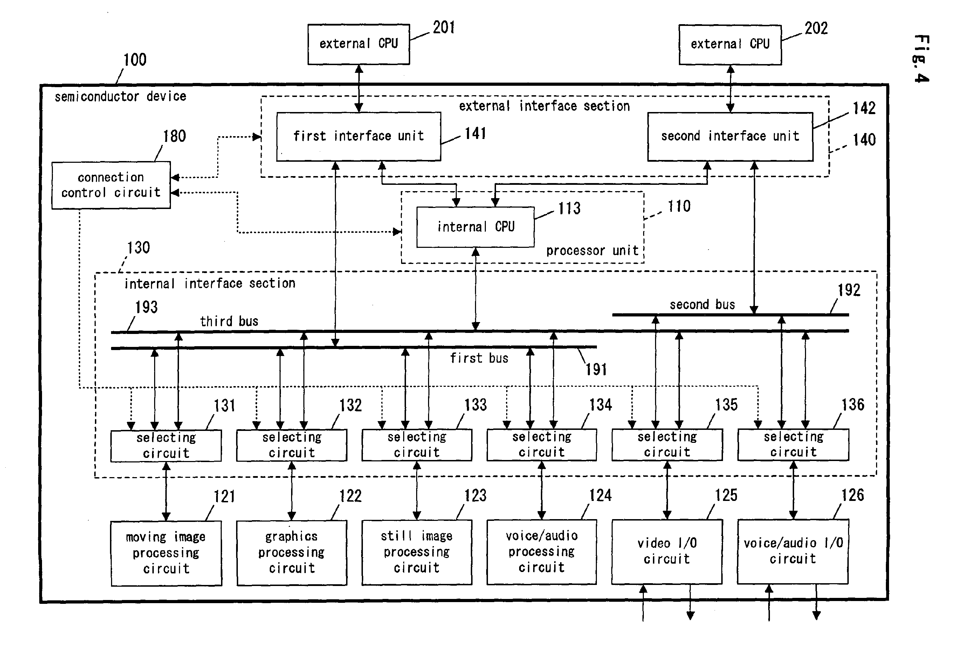

Fig. 4 is a block diagram illustrating a semiconductor device 100 in Embodiment 4 of the present invention. In Fig. 4, the same components as those in Fig. 2 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180, same as in Embodiment 2.

In the semiconductor device 100 of the present embodiment, the external interface section 140 includes a first interface unit 141 and a second interface unit 142, and an external CPU 201 is connected to the first interface unit 141, and another external CPU 202 is connected to the second interface unit 142.

The internal interface section 130 includes a third bus 193 connected to the internal CPU 113, a first bus 191 connected to the external CPU 201 through the first interface unit 141, and a second bus 192 connected to the external CPU 202 through the second interface unit 142. The internal interface section 130 further comprises selecting circuits 131-134 operable to select connection of the first processing group-belonging processing circuits 121-124 to the first bus 191 and to the third bus 193, and selecting circuits 135 and 136 operable to select connection of the second processing group-belonging processing circuits 125 and 126 to the second bus 192 and to the third bus 193.

In the semiconductor device 100 of the present embodiment, in the third bus 193, the internal CPU 113 operates as a bus master, and among the processing circuits 121-126, a processing circuit whose connection to the third bus 193 is selected by the corresponding one of the selecting circuits 131-136 operates as a bus slave. In the first bus 191, the external CPU 201 operates as a bus master, and among the processing circuits 121-124, a processing circuit whose connection to the first bus 191 is selected by the corresponding one of the selecting circuits 131-134 operates as a bus slave. In the second bus 192, the external CPU 201 operates as a bus master, and among the processing circuits 125 and 126, a processing circuit whose connection to the second bus 192 is selected by the corresponding one of the selecting circuits 135 and 136 operates as a bus slave.

According to the semiconductor device 100 of the present embodiment, the processing circuits 121-126 are classified into two processing groups according to each assigned function. A moving image processing circuit 121, a graphics processing circuit 122, a still image processing circuit 123, and a voice/audio processing circuit 124 belong to the first processing group, and are controllable by the internal CPU 113 and the external CPU 201. A video I/O circuit 125 and a voice/audio I/O circuit 126 belong to the second processing group related to a signal input/output, and are controllable by the internal CPU 113 and the external CPU 202.

Thus, according to the semiconductor device 100 of the present embodiment, the processing circuits 121-126 are classified into two processing groups depending on each function, thereby allowing for a precise execution of the control and processing from the external CPUs, with accompanying realization of efficient processing.

### Embodiment 5

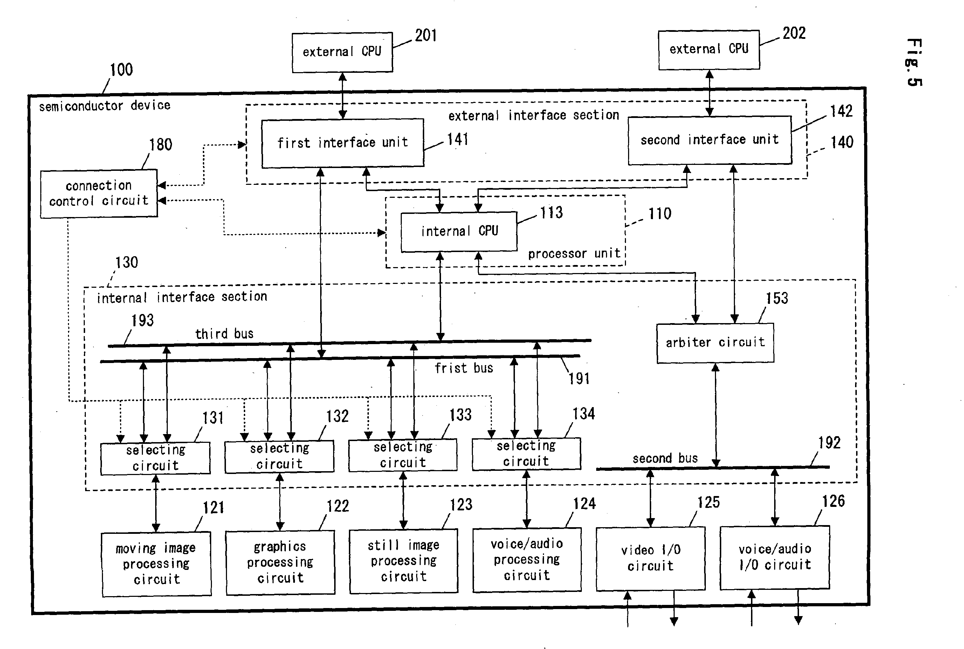

Fig. 5 is a block diagram illustrating a semiconductor device 100 in Embodiment 5 of the present invention. In Fig. 5, the same components as those in Fig. 2 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

In the semiconductor device 100 of the present embodiment, as in Embodiment 2 of the present invention, the external interface section 140 includes a first interface unit 141 and a second interface unit 142, and an external CPU 201 is connected to the first interface unit 141, and another external CPU 202 is connected to the second interface unit 142.

The internal interface section 130 includes an arbiter circuit 153, a third bus 193 connected to an internal CPU 113, a first bus 191 connected to the external CPU 201 through the first interface unit 141, and a second bus 192 connected to the arbiter circuit 153. The arbiter circuit 153 arbitrates between the internal CPU 113 and the second interface unit 142, and connects one of them to the second bus 192. The internal interface section 130 further includes selecting circuits 131-134 which select connection of the first processing group-belonging processing circuits 121-124 to the first bus 191 and to the third bus 193. The second processing group-belonging processing circuits 125 and 126 are directly connected to the second bus 192.

In the semiconductor device 100 of the present embodiment, in the third bus 193, the internal CPU 113 operates as a bus master, and among the processing circuits 121-124, a processing circuit whose connection to the third bus 193 is selected by the corresponding one of the selecting circuits 131-134 operates as a bus slave. In the first bus 191, the external CPU 201 operates as a bus master, and among the processing circuits 121-124, a processing circuit whose connection to the first bus 191 is selected by the corresponding one of the selecting circuits 131-134 operates as a bus slave. Moreover, in the second bus 192, the internal CPU 113 and the external CPU 202 operate as bus masters, and the processing circuits 125 and 126 operate as bus slaves.

As compared with Embodiment 4 of the present invention, in the semiconductor device 100 of the present embodiment, the processing circuits of the second processing group related to the input/output of data are directly connected to the second bus 192, and the processing circuits are able to be controlled by the internal CPU 113 and the external CPU 202, through the arbiter circuit 153. Consequently, either the internal CPU 113 or the external CPU 202 can access preferentially to the second bus 192 according to the priority set to each CPU, when both the CPUs access simultaneously to the second bus 192. Therefore, the internal CPU 113 and the external CPU 202 can avoid probable congestion in the second bus 192, thereby properly controlling the processing circuits 125 and 126.

### Embodiment 6

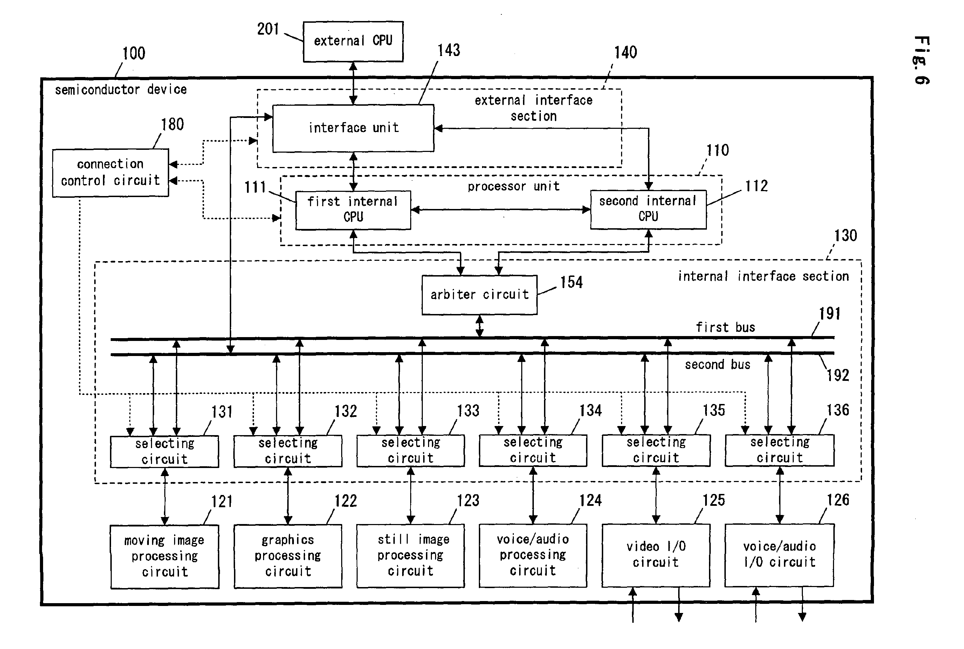

Fig. 6 is a block diagram illustrating a semiconductor device 100 in Embodiment 6 of the present invention. In Fig. 6, the same components as those in Fig. 1 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The processor unit 110 includes a first internal CPU 111 and a second internal CPU 112.

The external interface section 140 includes an interface unit 143, through which an external CPU 201 can be connected.

The internal interface section 130 includes an arbiter circuit 154, a first bus 191 connected to the arbiter circuit 154, a second bus 192 connected to the external CPU 201 through the interface unit 143, and selecting circuits 131-136 which select each connection of the processing circuits 121-126 to the first bus 191 or to the second bus 192. The arbiter circuit 154 arbitrates between the first internal CPU 111 and the second internal CPU 112, and connects one of them to the first bus 191.

In the semiconductor device 100 of the present embodiment, in the first bus 191, the first internal CPU 111 and the second internal CPU 112 operate as bus masters, and among the processing circuits 121-126, a processing circuit whose connection to the first bus 191 is selected by the corresponding one of the selecting circuits 131-136 operates as a bus slave. In the second bus 192, the external CPU 201 operates as a bus master, and among the processing circuits 121-126, a processing circuit whose connection to the second bus 192 is selected by the corresponding one of the selecting circuits 131-136 operates as a bus slave.

When the first internal CPU 111 and the second internal CPU 112 access the first bus 191 simultaneously, the arbiter circuit 154, as the result of arbitration, gives priority to the access from a high-priority CPU, and makes the access from a low-priority CPU stand by until the access from the high-priority CPU is completed.

Therefore, according to the semiconductor device 100 of the present embodiment, each of the processing circuits 121-126 can be connected to the first bus 191 or to the second bus 192 by switching connection of each corresponding one of the selecting circuits 131-136, thereby, the processing circuit connected to the first bus 191 becomes controllable by the first internal CPU 111 and the second internal CPU 112, and the processing circuit connected to the second bus 192 becomes controllable by the external CPU 201 further through the interface unit 143.

Moreover, in the semiconductor device 100 of the present embodiment, the first internal CPU 111 and the second internal CPU 112 can change the operating frequency by setup. Operation is possible at each frequency of the maximum operating frequency (n MHz), the one-half frequency (n/2 MHz), the one-quarter frequency (n/4 MHz), the one-eighth frequency (n/8 MHz), and the one-sixteenth frequency (n/16 MHz). A CPU with little processing amount can set up the operating frequency low, in order to adjust the pace of processing to that of a CPU with greater processing amount. The power consumption of the semiconductor device 100 can be reduced by finely setting up the operating frequency of each CPU.

### Embodiment 7

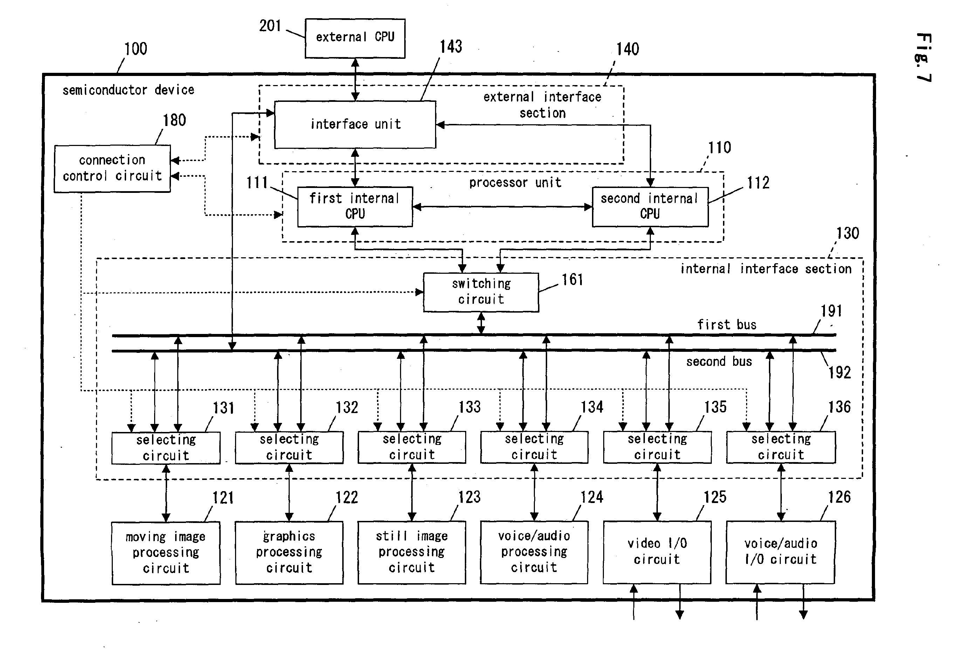

Fig. 7 is a block diagram illustrating a semiconductor device 100 in Embodiment 7 of the present invention. In Fig. 7, the same components as those in Fig. 6 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

In the semiconductor device 100 of the present embodiment, the internal interface section 130 employs a switching circuit 161 instead of the arbiter circuit 154 of Embodiment 6 of the present invention. Consequently, either CPU of the first internal CPU 111 and the second internal CPU 112 is connected to the first bus 191 by the switchover of the switching circuit 161. The connection control circuit 180 controls the switching circuit 161 according to the instruction of the first internal CPU 111 or the second internal CPU 112.

The switching circuit 161 corresponds to a switching unit.

In the semiconductor device 100 of the present embodiment, either CPU of the first internal CPU 111 and the second internal CPU 112, switched by the switching circuit 161 and connected to the first bus 191, operates as a bus master in the first bus 191, and among the processing circuits 121-126, a processing circuit whose connection to the first bus 191 is selected by the corresponding one of the selecting circuits 131-136 operates as a bus slave. In the second bus 192, the external CPU 201 operates as a bus master, and among the processing circuits 121-126, a processing circuit whose connection to the second bus 192 is selected by the corresponding one of the selecting circuits 131-136 operates as a bus slave.

Therefore, according to the semiconductor device 100 of the present embodiment, each of the processing circuits 121-126 can be connected to the first bus 191 or to the second bus 192 by switching connection of each corresponding one of the selecting circuits 131-136, thereby, the processing circuit connected to the first bus 191 becomes controllable by the first internal CPU 111 and the second internal CPU 112, and the processing circuit connected to the second bus 192 becomes controllable by the external CPU 201 further through the interface unit 143.

In addition, in the semiconductor device 100 of the present embodiment, the control of connection to the first bus 191 from the first and second internal CPUs 111 and 112 can be carried out independent of a priority.

### Embodiment 8

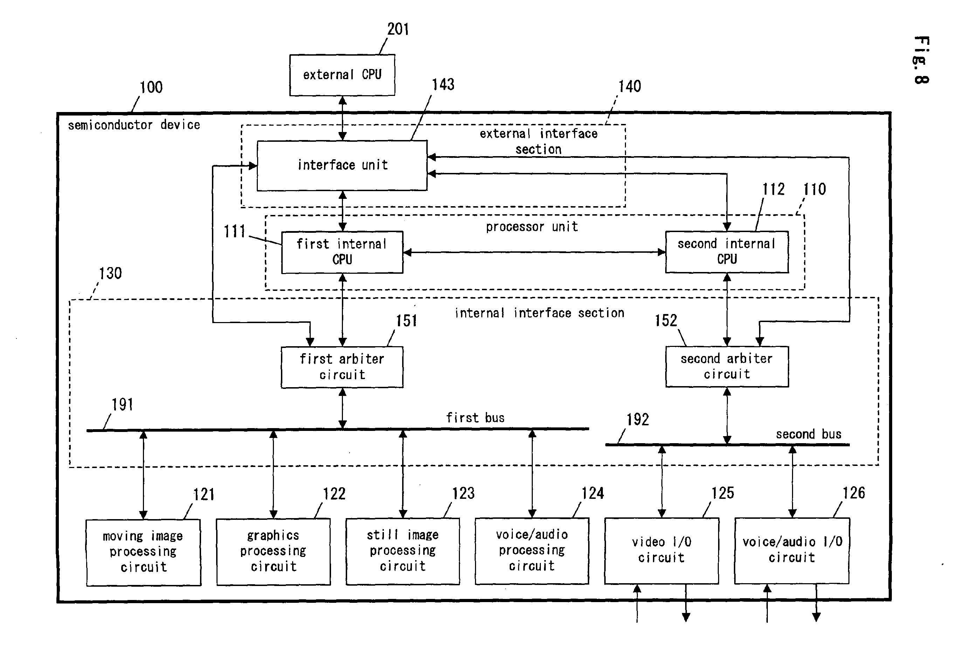

Fig. 8 is a block diagram illustrating a semiconductor device 100 in Embodiment 8 of the present invention. In Fig. 8, the same components as those in Fig. 6 are attached with the same reference symbols or numerals and the descriptions thereof are omitted.

The semiconductor device 100 according to the present embodiment comprises a processor unit 110, an internal interface section 130, an external interface section 140, and a plurality of processing circuits 121-126.

In the semiconductor device 100 of the present embodiment, the internal interface section 130 includes a first arbiter circuit 151 and a first bus 191 connected thereto, and a second arbiter circuit 152 and a second bus 192 connected thereto. The first arbiter circuit 151 arbitrates between the first internal CPU 111 and an external CPU 201 connected to the external interface section 140, and connects one of them to the first bus 191. The second arbiter circuit 152 arbitrates between the second internal CPU 112 and the external CPU 201, and connects one of them to the second bus 192.

The first arbiter circuit 151 corresponds to a first arbiter unit, and the second arbiter circuit 152 to a second arbiter unit.

The processing circuits 121-124 belonging to a first processing group are directly connected to the first bus 191 and the processing circuits 125 and 126 belonging to a second processing group are directly connected to the second bus 192.

In the semiconductor device 100 of the present embodiment, in the first bus 191, the first internal CPU 111 and the external CPU 201 operate as bus masters, and the processing circuits 121-124 operate as bus slaves. In the second bus 192, the second internal CPU 112 and the external CPU 201 operate as bus masters, and the processing circuits 125 and 126 operate as bus slaves.

Therefore, according to the semiconductor device 100 of the present embodiment, the processing circuits 121-124 become controllable by the first internal CPU 111 and the external CPU 201, and the processing circuits 125 and 126 become controllable by the second internal CPU 112 and the external CPU 201.

The semiconductor device 100 of the present embodiment possesses the structure in which assigned tasks of control and processing for the internal CPUs are clearly separated. As compared with Embodiment 7 of the present invention, the present embodiment omits the selecting circuits 131-136 and the connection control circuit 180, resulting in a reduced circuit scale as the features.

### Embodiment 9

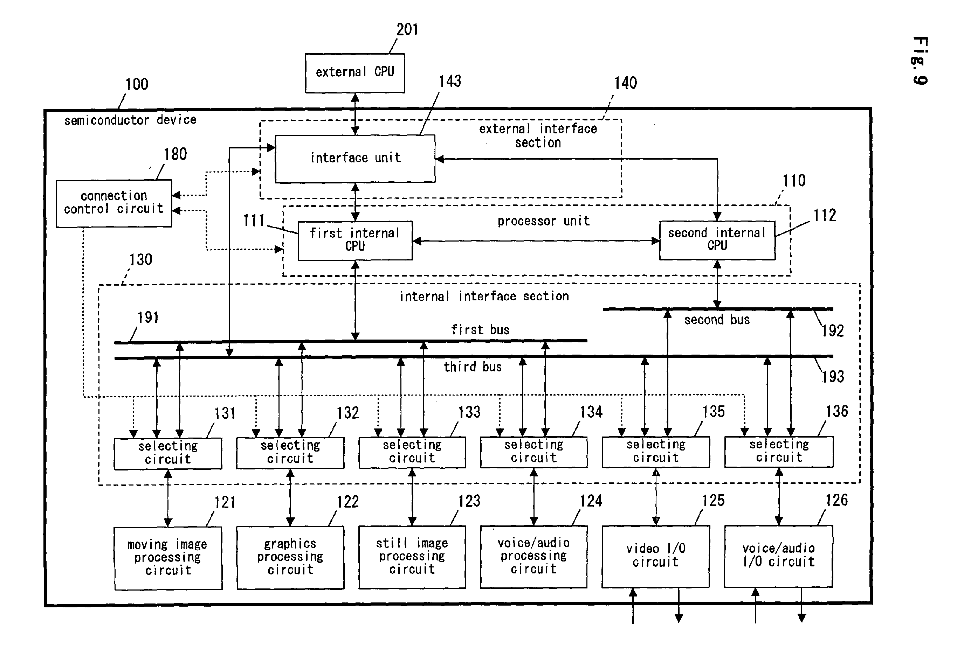

Fig. 9 is a block diagram illustrating a semiconductor device 100 in Embodiment 9 of the present invention. In Fig. 9, the same components as those in Fig. 6 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

In the semiconductor device 100 of the present embodiment, the internal interface section 130 includes a first bus 191 connected to a first internal CPU 111, a second bus 192 connected to a second internal CPU 112, and a third bus 193 connected to an external CPU 201 through an interface unit 143. The internal interface section 130 further includes selecting circuits 131-134 and selecting circuits 135 and 136. The selecting circuits 131-134 select the connection of the processing circuits 121-124 belonging to a first processing group, to the first bus 191 and to the third bus 193. The selecting circuits 135 and 136 select the connection of the processing circuits 125 and 126 belonging to a second processing group, to the second bus 192 and to the third bus 193.

In the semiconductor device 100 of the present embodiment, in the first bus 191, the first internal CPU 111 operates as a bus master, and among the processing circuits 121-124, a processing circuit whose connection to the first bus 191 is selected by the corresponding one of the selecting circuits 131-134 operates as a bus slave. In the second bus 192, the second internal CPU 112 operates as a bus master, and among the processing circuits 125 and 126, a processing circuit whose connection to the second bus 192 is selected by the corresponding one of the selecting circuits 135 and 136 operates as a bus slave. Moreover, in the third bus 193, the external CPU 201 operates as a bus master, and among the processing circuits 121-126, a processing circuit whose connection to the third bus 193 is selected by the corresponding one of the selecting circuits 131-136 operates as a bus slave.

In the semiconductor device 100 of the present embodiment, the first internal CPU 111 takes charge of the control and processing of the processing circuits 121-124 belonging to the first processing group chiefly, and the second internal CPU 112 takes charge of the control and processing of the processing circuits 125 and 126 belonging to the second processing group chiefly. Moreover, the external CPU 201 can control all the processing circuits 121-126 of the first processing group and the second processing group.

### Embodiment 10

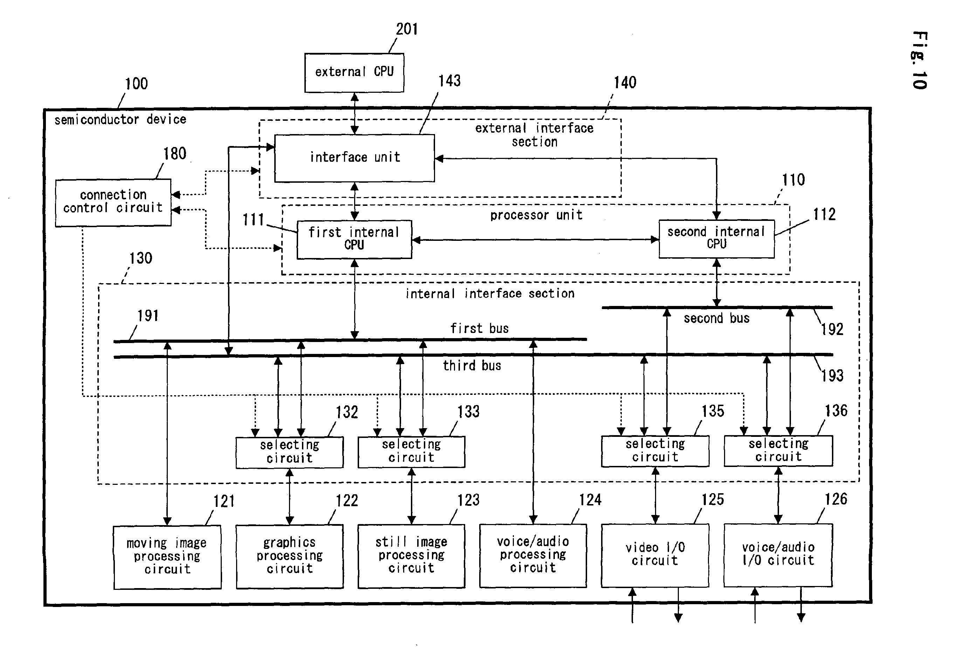

Fig. 10 is a block diagram illustrating a semiconductor device 100 in Embodiment 10 of the present invention. In Fig. 10, the same components as those in Fig. 9 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The semiconductor device 100 of the present embodiment can be regarded as a modification of the semiconductor device 100 of Embodiment 9 of the present invention shown in Fig. 9. Namely, the internal interface section 130 of the present embodiment omits the selecting circuit 131 and the selecting circuit 134 in Fig. 9, and is constructed so that a moving image processing circuit 121 and a voice/audio processing circuit 124 are always connected to a first bus 191.

Namely, in the semiconductor device 100 of the present embodiment, the moving image processing circuit 121 and the voice/audio processing circuit 124 are always controlled by the first internal CPU 111 as the bus slaves of the first bus 191. A graphics processing circuit 122 and a still image processing circuit 123 are controllable by the first internal CPU 111 and the external CPU 201.

In this way, a processing circuit which needs not to be under the control of the external CPU is directly connected to the bus without passing through the selecting circuit. As the result, the function-stressed, small-sized semiconductor device 100 can be realized, by omitting the selecting circuits.

### Embodiment 11

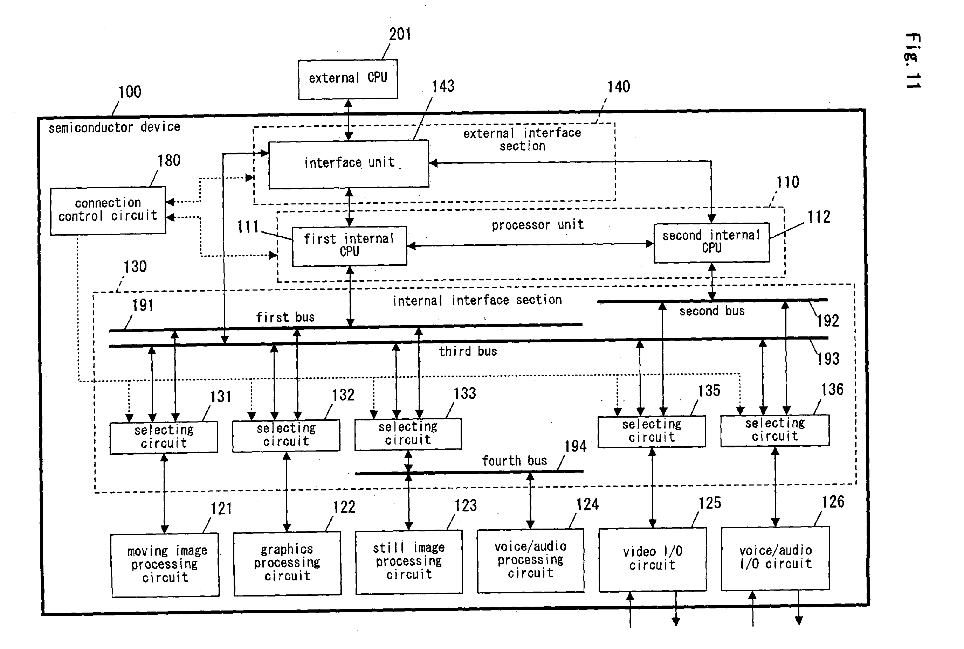

Fig. 11 is a block diagram illustrating a semiconductor device 100 in Embodiment 11 of the present invention. In Fig. 11, the same components as those in Fig. 9 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The semiconductor device 100 of the present embodiment can be regarded as a modification of the semiconductor device 100 of Embodiment 9 of the present invention shown in Fig. 9. Namely, the internal interface section 130 of the present embodiment omits the selecting circuit 134 in Fig. 9, and provides a fourth bus 194, to which the still image processing circuit 123 and the voice/audio processing circuit 124 are connected. The fourth bus 194 is connected to the first bus 191 or to the third bus 193 by selection of the selecting circuit 133.

In this way, the still image processing circuit 123 and the voice/audio processing circuit 124, which possess comparatively little processing amount, are connected to the fourth bus 194, thereby sharing the selecting circuit 133. As the result, the selecting circuit 134 of Fig. 9 can be omitted, with an accompanying advantage of a reduced circuit scale.

### Embodiment 12

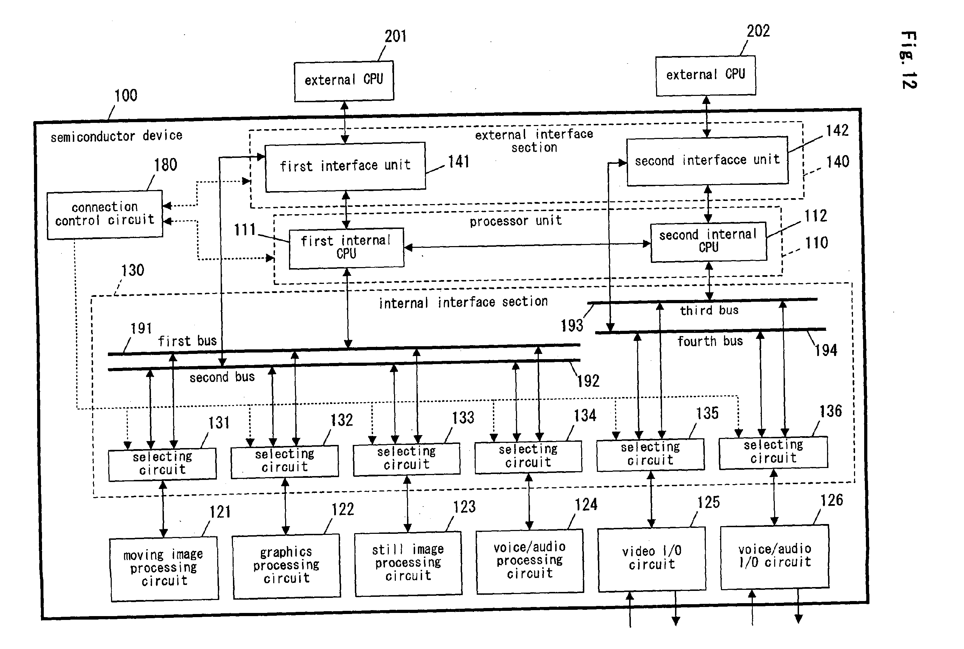

Fig. 12 is a block diagram illustrating a semiconductor device 100 in Embodiment 12 of the present invention. In Fig. 12, the same components as those in Fig. 1 are attached with the same reference symbols or numerals and the descriptions thereof are omitted.

The semiconductor device 100 according to the present embodiment comprises a processor unit 110, an internal interface section 130, an external interface section 140, a plurality of processing circuits 121-126, and a connection control circuit 180.

The processor unit 110 includes a first internal CPU 111 and a second internal CPU 112.

The external interface section 140 includes a first interface unit 141 and a second interface unit 142, an external CPU 201 is connected to the first interface unit 141, and another external CPU 202 is connected to the second interface unit 142.

The internal interface section 130 includes a first bus 191 to which the first internal CPU 111 is connected, a second bus 192 to which the external CPU 201 is connected through the first interface unit 141, a third bus 193 to which the second internal CPU 112 is connected, and a fourth bus 194 to which the external CPU 202 is connected through the second interface unit 142.

The internal interface section 130 includes selecting circuits 131-134 which select the connection of the processing circuits 121-124 belonging to a first processing group to the first bus 191 and to the second bus 192, and selecting circuits 135 and 136 which select the connection of the processing circuits 125 and 126 belonging to a second processing group to the third bus 193 and to the fourth bus 194.

In the semiconductor device 100 of the present embodiment, in the first bus 191, the first internal CPU 111 operates as a bus master, and among the processing circuits 121-124, a processing circuit whose connection to the first bus 191 is selected by the corresponding one of the selecting circuits 131-134 operates as a bus slave.

In the second bus 192, the external CPU 201 operates as a bus master, and among the processing circuits 121-124, a processing circuit whose connection to the second bus 192 is selected by the corresponding one of the selecting circuits 131-134 operates as a bus slave.

In the third bus 193, the second internal CPU 112 operates as a bus master, and among the processing circuits 125 and 126, a processing circuit whose connection to the third bus 193 is selected by the selecting circuits 135 and 136 operates as a bus slave.

Furthermore, in the fourth bus 194, the external CPU 202 operates as a bus master, and among the processing circuits 125 and 126, a processing circuit whose connection to the fourth bus 194 is selected by the selecting circuits 135 and 136 operates as a bus slave.

In this way, in the semiconductor device 100 of the present embodiment, the processing circuits are divided into the first and second processing groups, according to their functions, and the internal and external CPUs which control chiefly the respective processing groups are installed. Consequently, the semiconductor device 100 of the present embodiment can practice an advanced image processing at high speed.

### Embodiment 13

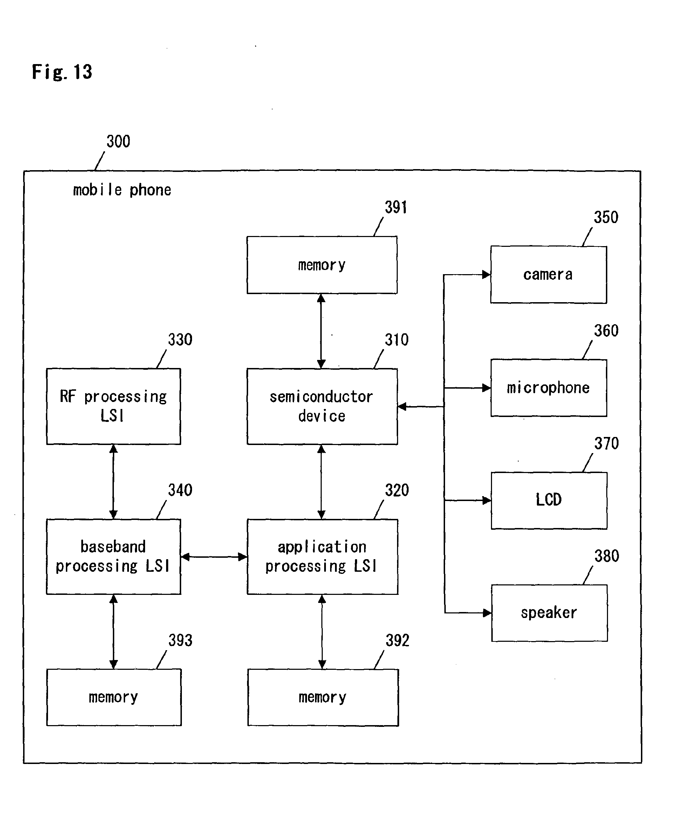

Fig. 13 is a block diagram illustrating a mobile phone 300 in Embodiment 13 of the present invention.

The mobile phone 300 according to the present embodiment comprises a semiconductor device 310, an application processing LSI 320, a RF processing LSI 330, a baseband processing LSI 340, a camera 350, a microphone 360, a display (LCD) 370, a speaker 380, a memory 391, a memory 392, and a memory 393.

Any semiconductor device 100 described in Embodiment 1-Embodyment 12 of the present invention may be employed as the semiconductor device 310.

In the following, operation of the mobile phone 300 of the present embodiment is explained in detail, exemplifying a case where the semiconductor device 100 of Embodiment 9 of the present invention (Fig. 9) is employed as the semiconductor device 310 of the present embodiment.

In the mobile phone 300 of the present embodiment, the external CPU 201 shown in Fig. 9 is mounted in the inside of the application processing LSI 320.

The RF processing LSI 330 performs the analog processing of high-frequency signals, and the baseband processing LSI 340 performs the digital wireless communications processing.

The application processing LSI 320 performs the processing of applications other than video/audio processing, the control of external input/output devices, and so forth.

The semiconductor device 100 performs the processing of the video/audio data which may otherwise require a high load for the application processing LSI 320, the data transmission/reception to and from the camera 350 and the display 370, and the data transmission/reception to and from the microphone 360 and the speaker 380.

The mobile phone 300 of the present embodiment is a camera-equipped mobile phone. Operation of the mobile phone 300 of the present embodiment is explained in the following with reference to Fig. 9 and Fig. 13, for a case where the mobile phone 300 functions as a videophone (the videophone mode).

In the videophone mode, the required processing is the compression/expansion processing of voice data, the compression/expansion processing of moving image data, the input/output processing of video data, and the input/output processing of the voice data. Therefore, the moving image processing circuit 121, the voice/audio processing circuit 124, the video I/O circuit 125, and the voice/audio I/O circuit 126 of the semiconductor device 100 are activated.

When a videophone call is made, a received bit stream, which multiplexes the image and voice of the other end mobile phone, is processed by the RF processing LSI 330, the baseband processing LSI 340, and the application processing LSI 320, and then transmitted from a CPU mounted in the application processing LSI 320 (corresponding to the external CPU 201 of Fig. 9) to the semiconductor device 100.

When the bit stream received by the semiconductor device 100 is enciphered, the first internal CPU 111 performs deciphering processing.

The deciphered bit stream, or the bit stream which is not enciphered from the first, is in the state where the voice bit stream and the moving-image bit stream are multiplexed. Accordingly, the first internal CPU 111 performs the separation processing to separate the deciphered bit stream to the voice bit stream and the moving-image bit stream.

After the separation processing, the expanding processing of the voice bit stream is performed by the voice/audio processing circuit 124, and the expanding processing of the moving-image bit stream is performed by the moving image processing circuit 121. In this case, the first internal CPU 111 issues, to the connection control circuit 180, an instruction for controlling the selecting circuit 131 and the selecting circuit 134. In response to the instruction from the first internal CPU 111, the connection control circuit 180 controls the selecting circuit 131 and the selecting circuit 134 to select the first bus 191. Then, the control over the voice/audio processing circuit 124 and the moving image processing circuit 121 becomes possible to be practiced by the first internal CPU 111.

The moving-image data expanded by the moving image processing circuit 121 and the voice data expanded by the voice/audio processing circuit 124 undergo the post-filter processing by the video I/O circuit 125 and the voice/audio I/O circuit 126, respectively. Furthermore, the moving image data undergoes, if needed, rotation processing and zooming processing, and before display, synthesizing processing with images, such as an icon image, a frame image, and a background. The moving image data are then outputted to the display 370. The voice data is outputted to the speaker 380.

In this operation, the selecting circuit 135 and the selecting circuit 136 are set up so that the second bus 192 may be selected, and the control of the video I/O circuit 125 and the voice/audio I/O circuit 126 are performed by the second internal CPU 112. The first internal CPU 111 and the second internal CPU 112 communicate to perform the timing processing in transferring the voice data and the moving image data, generated by the expanding processing. The second internal CPU 112 performs control to synchronize the output timing of the voice data with that of the moving image data.

Next, data processing of the image and voice data of the own mobile phone is explained.

As for the image and voice data of the own mobile phone, the moving image data from the camera 350 is inputted into the video I/O circuit 125, and the voice data from the microphone 360 is inputted into the voice/audio I/O circuit 126. The video I/O circuit 125 performs the inputting processing of the moving image data into the semiconductor device 100, and the filter processing to the inputted moving image data. The voice/audio I/O circuit 126 performs the inputting processing of the voice data into the semiconductor device 100, and the filter processing to the inputted voice data.

In this operation, the selecting circuit 135 and the selecting circuit 136 are already set up so that the second bus 192 may be selected, as mentioned above, accordingly, the second internal CPU 112 controls the video I/O circuit 125 and the voice/audio I/O circuit 126.

Next, the moving image data and the voice data, after the completion of the inputting processing and the filter processing, undergo the compression processing by the moving image processing circuit 121 and the voice/audio processing circuit 124, respectively.

In this operation, the selecting circuit 131 and the selecting circuit 134 are set up to select the first bus 191. Therefore, the first internal CPU 111 controls the moving image processing circuit 121 and the voice/audio processing circuit 124. The first internal CPU 111 and the second internal CPU 112 communicate to perform the timing processing in transferring the moving image data and the voice data for the compression processing.

The moving image bit stream and the voice bit stream, which have been respectively compressed by the moving image processing circuit 121 and the voice/audio processing circuit 124, are multiplexed by the first internal CPU 111 into one bit stream. Furthermore, when encipherment is required, the enciphering processing is performed for the multiplexed bit stream by the first internal CPU 111.

The enciphered bit stream, or when it is not necessary to encipher, the multiplexed bit stream, is transmitted to the external CPU 201 (the CPU which the application processing LSI 320 builds therein), and undergoes the pieces of processing by the application processing LSI 320, the baseband processing LSI 340, and the RF processing LSI 330, and is finally transmitted from the own mobile phone 300 to the other end mobile phone.

The above is explanation of the processing performed by the semiconductor device 100 in the videophone mode.

When the external CPU 201 has a margin in performance in the video phone mode stated above, the external CPU 201 may perform a part of the tasks which the first internal CPU 111 and the second internal CPU 112 perform originally, such tasks as the control of the processing circuits and the data processing. For example, the external CPU 201 may perform the compression/expansion processing of the voice data, the input/output control of the voice data, and the enciphering processing and deciphering processing of the bit stream. In this case, the following setup is sufficient: the selecting circuit 134 and the selecting circuit 136 may connect the voice/audio processing circuit 124 and the voice/audio I/O circuit 126 to the third bus 193, respectively, and the external CPU 201 may control the voice/audio processing circuit 124 and the voice/audio I/O circuit 126.

At this time, the timing processing in transferring the data across the CPUs can be practiced, if needed, by the communication between the external CPU 201 and the first internal CPU 111, or the communication between the external CPU 201 and the second internal CPU 112.

In this way, when the external CPU 201 perform a part of the tasks which the first internal CPU 111 and the second internal CPU 112 perform originally, such tasks as the control of the processing circuits and the data processing, the processing load of the first internal CPU 111 and the second internal CPU 112 becomes lighter compared with the case where the external CPU 201 does not perform the part of the tasks. Consequently, the first internal CPU 111 and the second internal CPU 112 become able to lower their own operating frequency to an optimum value.

For example, in the mobile phone 300 of the present embodiment, both the first internal CPU 111 and the second internal CPU 112 are originally operating at an operating-frequency of n/2 MHz. When the external CPU 201 performs the part of the tasks, even if the operating frequency is lowered to n/8 MHz for the first internal CPU 111, and to n/4 MHz for the second internal CPU 112, the respective pieces of processing may be completed in time. In this way, it becomes possible to reduce the power consumption of the semiconductor device 100, by lowering the operating frequency of the first internal CPU 111 and the second internal CPU 112.

Moreover, as described in the above explanation, there are cases where the external CPU 201 controls the voice/audio processing circuit 124 or where the first internal CPU 111 does the same, depending on the switchover of the setup in the selecting circuit 134. Similarly, even when practicing the same videophone function, it is possible to share the control load of the processing circuits 121-126 installed in the semiconductor device 100, by the external CPU 201, the first internal CPU 111, and the second internal CPU 112, according to the processing performance of the external CPU 201. Therefore, the employment of the semiconductor device 100 of the present embodiment allows for constructing the flexible mobile phone 300, comprising the external CPU 201 and the semiconductor device 100.

Moreover, when the so-called avatar-videophone function needs to be practiced while the mobile phone 300 of the present embodiment practices the videophone function, the mobile phone 300 activates the graphics processing circuit 122, in addition to the processing circuits used in the videophone mode described above. In the so-called avatar-videophone, the other end image received is an artificial image composed of graphics, such as a character, instead of a natural image inputted from the camera. At this time, the control of the graphics processing circuit 122 can be performed by either the external CPU 201 or the first internal CPU 111. When there is a margin in the processing performance of the external CPU 201 and in the program memory area (a part of the area of the memory 392), the selecting circuit 132 sets up to connect the graphics processing circuit 122 to the third bus 193, thereby enabling the external CPU 201 to control the graphics processing circuit 122. When there is no margin, on the contrary, a necessary program is installed in the side of the first internal CPU 111, the selecting circuit 132 sets up to connect the graphics processing circuit 122 to the first bus 191, thereby enabling the first internal CPU 111 to control the graphics processing circuit 122.

Next, the following explains a case where the video camera function is activated (the video camera mode) in the mobile phone 300 of the present embodiment.

In the video camera mode, the following pieces of processing are required: the compression processing of voices, the compression processing of moving images, the input/output processing of video data, and the input processing of voice data. Accordingly, it is necessary to activate the moving image processing circuit 121, the voice/audio processing circuit 124, the video I/O circuit 125, and the voice/audio I/O circuit 126.

It is assumed in the video camera mode that the size and frame rate of moving images to be processed become greater than those in the videophone mode described above. This means the following case. For example, the moving image to be processed in the videophone mode possesses a QCIF size (176x144 pixels) and a 15fps frame rate, however, the moving image to be processed in the video camera mode possesses a VGA size (640x480 pixels) and a 30fps frame rate. In this case, the load of the CPUs in the control of the processing circuits pertaining to the moving image and in the data processing thereof becomes high, therefore, the processing pertaining to the audio compression processing is performed by the external CPU 201, and the other processing is performed by the first internal CPU 111 and the second internal CPU 112.

The processing flow in the video camera mode in the mobile phone 300 of the present embodiment is explained in the following.

As for the data of the image and voice currently shot, the moving image data from the camera 350 is inputted into the video I/O circuit 125, and the voice data from the microphone 360 is inputted into the voice/audio I/O circuit 126, respectively.

The video I/O circuit 125 performs the inputting processing of the moving image data into the semiconductor device 100, and the filter processing to the inputted moving image data. The voice/audio I/O circuit 126 performs the inputting processing of the voice data into the semiconductor device 100, and the filter processing to the inputted voice data.

In this operation, the selecting circuit 135 and the selecting circuit 136 are set up to select the second bus 192, and the second internal CPU 112 controls the video I/O circuit 125 and the voice/audio I/O circuit 126. Furthermore, the video I/O circuit 125 makes the moving image data undergo, if needed, rotation processing and zooming processing, and before display, synthesizing processing with images, such as an icon image, a frame image, and a background. After then, the video I/O circuit 125 outputs the processed moving image data to the display 370. The voice/audio I/O circuit 126 outputs the voice data to the speaker 380.

Next, the moving image data and voice data inputted and then filtered undergo the compression processing by the moving image processing circuit 121 and the voice/audio processing circuit 124, respectively.

During the course, the selecting circuit 131 makes selection to connect the moving image processing circuit 121 to the first bus 191, and the first internal CPU 111 controls the moving image processing circuit 121. The selecting circuit 134 makes selection to connect the voice/audio processing circuit 124 to the third bus 193, and the external CPU 201 controls the voice/audio processing circuit 124. Communication between the first internal CPU 111 and the second internal CPU 112 and communication between the external CPU 201 and the second internal CPU 112 perform the timing processing in transferring the moving image data and the voice data for the compression processing

The moving image bit stream compressed by the moving image processing circuit 121 and the voice bit stream compressed by the voice/audio processing circuit 124 are transferred to the external CPU 201, and then multiplexed to one bit stream by the external CPU 201.

Furthermore, if encipherment is required for the multiplexed bit stream, the enciphering processing is performed by the external CPU 201.

The enciphered bit stream, or the multiplexed bit stream when the encipherment is not necessary, is transferred to the memory 392 to be stored therein.

The following explains a case where a digital still camera function is activated furthermore in the video camera mode, that is, a case where the still image shooting is practiced in a certain moment during the moving-image shooting.

In this case, it is necessary to further activate the still image processing circuit 123 for the still image compression processing. Since the load of the first internal CPU 111 is heavy in controlling the moving image processing circuit 121, the external CPU 201 controls the still image processing circuit 123. Therefore, the selecting circuit 133 connects the still image processing circuit 123 to the third bus 193.

The processing flow pertaining to the still image is as follows. In addition to the processing flow in the video camera mode described above, the compression processing is performed by the still image processing circuit 123 for the image which has undergone the input processing by the video I/O circuit 125. The generated still image bit stream is transferred to the external CPU 201, and the enciphering processing is performed by the external CPU 201 when encipherment is required. The enciphered still image bit stream, or the pre-encipherment still image bit stream when the encipherment is not required, is transferred to the memory 392 to be stored therein.

However, when practicing the digital still camera function independently, the selecting circuit 133 connects the still image processing circuit 123 to the first bus 191, and the first internal CPU 111 controls the still image processing circuit 123.

In this way, according to the mobile phone 300 of the present embodiment, by switching the setup of the selecting circuit 133, the external CPU 201 can be directly connected to the still image processing circuit 123 to control the latter, thereby distributing the load in control of the processing circuits 121-126. Therefore, when compared with the case where the processing circuits 121-126 are controlled only by the first internal CPU 111 and the second internal CPU 112, it is possible to realize applications with advanced and sophisticated functions, such as simultaneous operation of the video camera function and the digital still camera function, as well as applications with high performance, such as increase of the image size and frame rate in the video camera function, in the simultaneous operation of the video camera function and the digital still camera function.

In the above explanation, the voice/audio processing circuit 124 is controlled by the first internal CPU 111 in the videophone mode, and by the external CPU 201 in the video camera mode. In this way, it is possible to optimize distribution of the control-related load among the external CPU 201, the first internal CPU 111, and the second internal CPU 112, by switching the setup of the selecting circuits 131-136 for every application, and changing the charge of the control of the processing circuits 121-126 among the CPUs.

In the same way as the above description, also in the execution of other applications, such as a moving-image/still-image reproduction function, and a moving-image/still-image edit function, the external CPU 201, the first internal CPU 111, or the second internal CPU 112 activates and controls the processing circuits required at the time of each application execution, out of the processing circuits 121-126.

In the above explanation on the mobile phone 300 of the present embodiment, the semiconductor device 100 of Fig. 9 described in Embodiment 9 of the present invention is employed as the semiconductor device 310.

In addition, in the above explanation, the first internal CPU 111 or the external CPU 201 is assumed to perform the processing of encipherment and decipherment of the bit stream. However, it is also possible to provide an independent processing means to practice the processing of encipherment and decipherment. Moreover, the processing of encipherment and decipherment can be practiced by the second internal CPU 112, instead of the first internal CPU 111 or the external CPU 201.

In addition, in the above explanation, the first internal CPU 111 or the external CPU 201 is assumed to perform the processing of multiplexing and demultiplexing of the bit stream. However, it is also possible to provide an independent processing means to practice the processing of multiplexing and demultiplexing. Moreover, the processing of multiplexing and demultiplexing can also be practiced by the second internal CPU 112, instead of the first internal CPU 111 or the external CPU 201.

In addition, in the above explanation, the video I/O circuit 125 is assumed to perform the filter processing, the rotation processing, the zooming processing, and the image synthesizing processing for the moving image data inputted and the moving image data to be outputted. However, it is also possible to provide another processing means to practice these pieces of processing. As a further alternative, the first internal CPU 111 or the second internal CPU 112 can practice these pieces of processing.

In addition, the above explanation has described the operation of the mobile phone 300 of the present embodiment by exemplifying the case where the semiconductor device 100 of Embodiment 9 of the present invention (Fig. 9) is employed as the semiconductor device 310 of the present embodiment. However, the semiconductor device 100 explained by other embodiments of the present invention may be employed as the semiconductor device 310.

For example, when the semiconductor device 100 of Embodiment 8 of the present invention (Fig. 8) is employed as the semiconductor device 310 of the present embodiment, the processing circuits 121-124 are always connected to the first bus 191, therefore, the access to each of the processing circuits 121-124 from the external CPU 201 and the first internal CPU 111 is controlled by the first arbiter circuit 151 based on a priority. Furthermore, the processing circuits 125 and 126 are always connected to the second bus 192, therefore, the access to the processing circuits 125 and 126 from the external CPU 201 and the second internal CPU 112 is controlled by the second arbiter circuit 152 based on a priority.

Moreover, when the semiconductor device 100 shown in Fig. 9 is employed as the semiconductor device 310 of the present embodiment, it is possible to provide the connection control circuit 180 with a semaphore register therein, and to set up the selecting circuits 131-136 so that a CPU which gains the semaphore may be connected when the external CPU 201, the first internal CPU 111, and the second internal CPU 112 access the semaphore register.

Moreover, in the mobile phone 300 of the present embodiment, when the application processing LSI 320 includes two CPUs which can control the semiconductor device 310, the semiconductor device 100 of Embodiment 12 of the present invention (Fig. 12) can be employed as the semiconductor device 310 of the present embodiment. In this case, the external CPU 201 shares the processing in the processing circuits 121-124 with the first internal CPU 111, and the external CPU 202 shares the processing in the processing circuits 125 and 126 with the second internal CPU 112. Consequently, the processing load of the first internal CPU 111 and the second internal CPU 112 is further reducible, thereby allowing more advanced application processing to be practiced.

In addition, in the mobile phone 300 shown in Fig. 13, it is possible to realize a simple configuration in which the semiconductor device 310 is connected to the baseband processing LSI 340, omitting the application processing LSI 320 and the memory 392. In this case, it is preferable to design a new baseband processing LSI 340 to possess a large portion of the functions which the application processing LSI 320 of the present embodiment possesses. Moreover, in the above-described simple configuration, the external CPU to the semiconductor device 310 corresponds to a CPU in the baseband-processing LSI 340.

In the above explanation of the embodiments of the present invention, it is assumed in each embodiment that the semiconductor device 100 comprises the moving image processing circuit 121, the graphics processing circuit 122, the still image processing circuit 123, the voice/audio processing circuit 124, the video I/O circuit 125, and the voice/audio I/O circuit 126.

However, the present invention does not limit the combination of the processing circuits which the semiconductor device 100 comprises to the above-mentioned combination. The semiconductor device 100 may not comprise the voice/audio processing circuit 124. Alternatively, the first internal CPU 111, the second internal CPU 112, or the external CPU 201 may perform the processing of compression/expansion of voice or audio data.

Moreover, it is also preferable that the moving image processing circuit 121, the still image processing circuit 123, and the voice/audio processing circuit 124 may perform only the processing of either compression or expansion, respectively, rather than the processing of compression and expansion.

It is also preferable that the video I/O circuit 125 and the voice/audio I/O circuit 126 may perform only the input processing or the output processing of the video data and voice/audio data, respectively, rather than both of the input processing and the output processing.

As explained above, the aim of the present invention is to provide a high-performance, high-efficiency, low-power consumption semiconductor device operable to realize a flexible system configuration with an external CPU, and a mobile phone using the semiconductor device. Accordingly, various modifications and variations of the present invention may be made without departing from the spirit and scope of the present invention.

According to the present invention, it is possible to provide a high-performance, high-efficiency, low-power consumption semiconductor device operable to realize a flexible system configuration with an external CPU, and a mobile phone using the semiconductor device.

### Industrial Applicability

The semiconductor device relating to the present invention can be used for such devices that require media processing, such as a mobile phone, a digital video camera, and a DVD recorder, and their applicable fields.

## Claims

1. A semiconductor device comprising:
a processor unit;
an internal interface section connected to said processor unit;
an external interface section connected to said processor unit and said internal interface section; and
a plurality of data processing units connected to said internal interface section,
wherein said processor unit comprises an internal CPU,
wherein said external interface section is connected to an external CPU, and
wherein each of said plurality of data processing units can be controlled by any one of said internal CPU and the external CPU, via said internal interface section.

2. The semiconductor device as defined in claim 1, wherein said internal interface section comprises:
a first bus connected to said processor unit;
a second bus connected to said external interface section; and
a plurality of selecting units, each of said plurality of selecting units being connected to said first bus and said second bus, and further connected to each of said plurality of data processing units in a one-to-one correspondence manner,
wherein each of said plurality of selecting units selects one of said first bus and said second bus as a bus to which each corresponding one of said plurality of data processing units is to be connected, and
wherein each of said plurality of data processing units can be controlled by any one of said internal CPU and the external CPU, via the bus selected by each corresponding one of said plurality of selecting units.

3. The semiconductor device as defined in claim 1, wherein said external interface section comprises:
a plurality of interface units connected to a plurality of external CPUs in a one-to-one correspondence manner, and
wherein each of said plurality of data processing units can be controlled by any one of said internal CPU and the plurality of external CPUs.

4. The semiconductor device as defined in claim 3, wherein said plurality of interface units include a first interface unit and a second interface unit, said first interface unit and said second interface unit being connected to the plurality of external CPUs in a one-to-one correspondence manner,
wherein said internal interface section comprises:
a first arbiter unit connected to said first interface unit and said processor unit;
a second arbiter unit connected to said second interface unit and said processor unit;
a first bus connected to said first arbiter unit;
a second bus connected to said second arbiter unit; and
a plurality of selecting units, each of said plurality of selecting units being connected to said first bus and said second bus, and further connected to each of said plurality of data processing units,
wherein said first arbiter unit arbitrates between said internal CPU and one of the plurality of external CPUs connected to said first interface unit, thereby connecting the arbitrated CPU to said first bus,
wherein said second arbiter unit arbitrates between said internal CPU and one of the plurality of external CPUs connected to said second interface unit, thereby connecting the arbitrated CPU to said second bus,
wherein each of said plurality of selecting units is connected to each of said plurality of data processing units and selects one of said first bus and said second bus as a bus to which each corresponding one of said plurality of data processing units is to be connected, and
wherein each of said plurality of data processing units can be controlled by any one of said internal CPU and the plurality of external CPUs connected to said external interface section, via the selected bus and one of said first arbiter unit and said second arbiter unit.

5. The semiconductor device as defined in claim 3, wherein said plurality of interface units include a first interface unit and a second interface unit, said first interface unit and said second interface unit being connected to the plurality of external CPUs in a one-to-one correspondence manner,
wherein said internal interface section comprises:
a first bus connected to said first interface unit;
a second bus connected to said second interface unit;
a third bus connected to said processor unit;
a plurality of first selecting units, each of said plurality of first selecting units being connected to said first bus and said third bus; and
a plurality of second selecting units, each of said plurality of second selecting units being connected to said second bus and said third bus,
wherein said plurality of data processing units include one or more data processing units belonging to a first processing group and one or more data processing units belonging to a second processing group,
wherein said one or more data processing units belonging to the first processing group are connected to said plurality of first selecting units in a one-to-one correspondence manner,
wherein said one or more data processing units belonging to the second processing group are connected to said plurality of second selecting units in a one-to-one correspondence manner,
wherein each of said plurality of first selecting units selects one of said first bus and said third bus as a bus to which each corresponding one of the data processing units belonging to the first processing group is to be connected,
wherein each of said plurality of second selecting units selects one of said second bus and said third bus as a bus to which each corresponding one of the data processing units belonging to the second processing group to be connected,
wherein each of said one or more data processing units belonging to the first processing group can be controlled by any one of said internal CPU and one of the plurality of external CPUs connected to said first interface unit, via the bus selected by each corresponding one of said plurality of first selecting units, and
wherein each of said one or more data processing units belonging to the second processing group can be controlled by any one of said internal CPU and one of the plurality of external CPUs connected to said second interface unit, via the bus selected by each corresponding one of said plurality of second selecting units.

6. The semiconductor device as defined in claim 3, wherein said plurality of interface units include a first interface unit and a second interface unit, said first interface unit and said second interface unit being connected to the plurality of external CPUs in a one-to-one correspondence manner,
wherein said internal interface section comprises:
an arbiter unit connected to said processor unit and said second interface unit;
a first bus connected to said first interface unit;
a second bus connected to said arbiter unit;
a third bus connected to said processor unit; and
a plurality of selecting units connected to said first bus and said third bus,
wherein said plurality of data processing units include one or more data processing units belonging to a first processing group and one or more data processing units belonging to a second processing group,
wherein said one or more data processing units belonging to the first processing group are connected to said plurality of selecting units in a one-to-one correspondence manner,
wherein said one or more data processing units belonging to the second processing group are connected to said second bus,
wherein each of said plurality of selecting units selects one of said first bus and said third bus as a bus to which each corresponding one of said plurality of data processing units is to be connected,
wherein said arbiter unit arbitrates between said internal CPU and one of the plurality of external CPUs connected to said second interface unit, thereby connecting the arbitrated CPU to said second bus,
wherein each of said one or more data processing units belonging to the first processing group can be controlled by any one of said internal CPU and one of the plurality of external CPUs connected to said first interface unit, via the bus selected by each corresponding one of said plurality of selecting units, and
wherein each of said one or more data processing units belonging to the second processing group can be controlled by any one of said internal CPU and one of the plurality of external CPUs connected to said second interface unit, via said arbiter unit and said second bus.

7. The semiconductor device as defined in claim 1, wherein said processor unit comprises a plurality of internal CPUs, and
wherein each of said plurality of data processing units can be controlled by any one of said plurality of internal CPUs and the external CPU.

8. The semiconductor device as defined in claim 7, wherein said plurality of internal CPU comprises:
a first internal CPU; and
a second internal CPU,
wherein said internal interface section comprises:
an arbiter unit connected to said first internal CPU and said second internal CPU;
a first bus connected to said arbiter unit;
a second bus connected to said external interface section; and
a plurality of selecting units, each of said plurality of selecting units being connected to said first bus and said second bus, and further connected to each of said plurality of data processing units in a one-to-one corresponding manner,
wherein each of said plurality of selecting units selects one of said first bus and said second bus as a bus to which each corresponding one of said plurality of data processing units is to be connected,
wherein said arbiter unit arbitrates between said first internal CPU and said second internal CPU, thereby connecting the arbitrated CPU to said first bus, and
wherein each of said plurality of data processing units can be controlled by any one of said first internal CPU, said second internal CPU, and said external CPU, via a bus selected by each corresponding one of said plurality of selecting units.

9. The semiconductor device as defined in claim 7, wherein said plurality of internal CPU comprises:
a first internal CPU; and
a second internal CPU,
wherein said internal interface section comprises:
a switching unit connected to said first internal CPU and said second internal CPU;
a first bus connected to said switching unit;
a second bus connected to said external interface section; and
a plurality of selecting units, each of said plurality of selecting units being connected to said first bus and said second bus, and further connected to each of said plurality of data processing units in a one-to-one corresponding manner,
wherein each of said plurality of selecting units selects one of said first bus and said second bus as a bus to which each corresponding one of said plurality of data processing units is to be connected,
wherein said switching unit switches between said first internal CPU and said second internal CPU, thereby connecting the switched CPU to said first bus, and
wherein each of said plurality of data processing units can be controlled by any one of said first internal CPU, said second internal CPU, and said external CPU, via the bus selected by each corresponding one of said plurality of selecting units.

10. The semiconductor device as defined in claim 7, wherein said plurality of internal CPU comprises:
a first internal CPU; and
a second internal CPU,
wherein said internal interface section comprises:
a first arbiter unit to said first internal CPU and said external interface section;
a second arbiter unit connected to said second internal CPU and said external interface section;
a first bus connected to said first arbiter unit; and
a second bus connected to said second arbiter unit,
wherein said plurality of data processing units include one or more data processing units belonging to a first processing group and one or more data processing units belonging to a second processing group,
wherein said one or more data processing units belonging to the first processing group are connected to said first bus,
wherein said one or more data processing units belonging to the second processing group are connected to said second bus,
wherein said first arbiter unit arbitrates between said first internal CPU and the external CPU connected to said external interface section, thereby connecting the arbitrated CPU to said first bus,
wherein said second arbiter unit arbitrates between said second internal CPU and the external CPU connected to said external interface section, thereby connecting the arbitrated CPU to said second bus,
wherein each of the data processing units belonging to the first processing group can be controlled by any one of said first internal CPU and the external CPU, via said first arbiter unit and said first bus, and
wherein each of the data processing units belonging to the second processing group can be controlled by any one of said second internal CPU and the external CPU, via said second arbiter unit and said second bus.

11. The semiconductor device as defined in claim 7, wherein said plurality of internal CPU comprises:
a first internal CPU; and
a second internal CPU,
wherein said internal interface section comprises:
a first bus connected to said first internal CPU;
a second bus connected to said second internal CPU;
a third bus connected to said external interface section;
a plurality of first selecting units connected to said first bus and said third bus; and
a plurality of second selecting units connected to said second bus and said third bus,
wherein said plurality of data processing units include one or more data processing units belonging to a first processing group and one or more data processing units belonging to a second processing group,
wherein said one or more data processing units belonging to the first processing group are connected to said plurality of first selecting units in a one-to-one correspondence manner,
wherein said one or more data processing units belonging to the second processing group are connected to said plurality of second selecting units in a one-to-one correspondence manner,
wherein each of said plurality of first selecting units selects one of said first bus and said third bus as a bus to which each corresponding one of said data processing units belonging to the first processing group is to be connected,
wherein each of said plurality of second selecting units selects one of said second bus and said third bus as a bus to which each corresponding one of said data processing units belonging to the second processing group is to be connected,
wherein each of said one or more data processing units belonging to the first processing group can be controlled by any one of said first internal CPU and the external CPU connected to said external interface section, via the bus selected by the corresponding one of said plurality of first selecting units, and
wherein each of said one or more data processing units belonging to the second processing group can be controlled by any one of said second internal CPU and the external CPU connected to said external interface section, via the bus selected by the corresponding one of said plurality of second selecting units.

12. The semiconductor device as defined in claim 1, wherein said processor unit comprises a plurality of internal CPUs,
wherein said external interface section comprises a plurality of interface units,
wherein said plurality of interface units are connected to a plurality of external CPUs in a one-to-one correspondence manner, and
wherein each of said plurality of data processing units can be controlled by any one of said plurality of internal CPUs and the plurality of external CPUs.

13. The semiconductor device as defined in claim 12, wherein said plurality of internal CPUs comprises:
a first internal CPU; and
a second internal CPU,
wherein said plurality of interface units comprises:
a first interface unit; and
a second interface unit,
wherein said first interface unit and said second interface unit are connected to the plurality of external CPUs in a one-to-one correspondence manner,
wherein said internal interface section comprises:
a first bus connected to said first internal CPU;
a second bus connected to said first interface unit;
a third bus connected to said second internal CPU;
a fourth bus connected to said second interface unit;
a plurality of first selecting units connected to said first bus and said second bus; and
a plurality of second selecting units connected to said third bus and said fourth bus,
wherein said plurality of data processing units include one or more data processing units belonging to a first processing group and one or more data processing units belonging to a second processing group,
wherein said one or more data processing units belonging to the first processing group are connected to said plurality of first selecting units in a one-to-one corresponding manner,
wherein said one or more data processing units belonging to the second processing group are connected to said plurality of second selecting units in a one-to-one corresponding manner,
wherein each of said plurality of first selecting units selects one of said first bus and said second bus as a bus to which each corresponding one of said one or more data processing units belonging to the first processing group is to be connected,
wherein each of said plurality of second selecting units selects one of said third bus and said fourth bus as a bus to which each corresponding one of said one or more data processing units belonging to the second processing group is to be connected,
wherein each of said one or more data processing units belonging to the first processing group can be controlled by any one of said first internal CPU and the external CPU connected to said first interface unit, via the bus selected by each corresponding one of said plurality of first selecting units, and
wherein each of said one or more data processing units belonging to the second processing group can be controlled by any one of said second internal CPU and the external CPU connected to said second interface unit, via the bus selected by each corresponding one of said plurality of second selecting units.

14. The semiconductor device as defined in claim 1, wherein said internal CPU included in said processor unit and the external CPU connected to said external interface section operate in parallel.

15. The semiconductor device as defined in claim 7, wherein each of said plurality of internal CPUs included in said processor unit operates at a variable operating frequency.

16. The semiconductor device as defined in claim 1, wherein said plurality of data processing units include at least two of a moving picture processing circuit, a graphics processing circuit, a still picture processing circuit, a voice/audio processing circuit, a video input/output circuit, and a voice/audio input/output circuit.

17. A mobile phone comprising:
said semiconductor device as defined in claim 1;
an application processing LSI;
a RF processing LSI; and
a baseband processing LSI,
wherein said semiconductor device executes video data processing and audio data processing that require high load when executed by said application processing LSI.

18. The mobile phone as defined in claim 17, wherein said application processing LSI comprises at least one or more CPUs operable to share processing of the CPU included in said semiconductor device.
